# EUROPEAN PATENT SPECIFICATION

(11) **EP 3 688 068 B1**
(45) Date of publication and mention of the grant of the patent: **01.06.2022**
(21) Application number: 18782196.2
(22) Date of filing: 11.09.2018
(51) Int. Cl.: C08L 81/02

(54) **CURABLE SEALANT COMPOSITIONS, SEAL CAP, AND METHODS OF MAKING AND USING THE SAME**
HÄRTBARE DICHTUNGSZUSAMMENSETZUNGEN, VERSCHLUSSKAPPE UND VERFAHREN ZU DEREN HERSTELLUNG UND VERWENDUNG
COMPOSITIONS D'ÉTANCHÉITÉ DURCISSABLES, CAPUCHON D'ÉTANCHÉITÉ, ET LEURS PROCÉDÉS DE FABRICATION ET D'UTILISATION

(30) Priority: 26.09.2017 US 201762563231 P; 02.10.2017 US 201762566709 P
(43) Date of publication of application: 05.08.2020
(73) Proprietor: 3M Innovative Properties Company, Saint Paul, Minnesota 55133-3427 (US)
(72) Inventor: MOSER, William H., Saint Paul, Minnesota 55133-3427 (US); TOWNSEND, Erik M., Saint Paul, Minnesota 55133-3427 (US); ZOOK, Jonathan D., Saint Paul, Minnesota 55133-3427 (US); DEMOSS, Susan E., Saint Paul, Minnesota 55133-3427 (US); COOK, Clinton J., Saint Paul, Minnesota 55133-3427 (US); BOYD, Scott A., Saint Paul, Minnesota 55133-3427 (US); SWAN, Michael D., Saint Paul, Minnesota 55133-3427 (US)
(74) Representative: Mathys & Squire
(86) International application number: PCT/IB2018/056934
(87) International publication number: WO 2019/064103

(56) References cited:
- WO-A1-2016/106352
- WO-A1-2017/044704
- US-A9- 2016 304 251

## Description

### TECHNICAL FIELD

The present disclosure broadly relates to thiol-ene sealant compositions and methods for their manufacture and use.

### BACKGROUND

A desirable combination of properties for sealant compositions (i.e., sealants) that has been sought in the art is the combination of a long application time (i.e., the time during which the sealant remains applicable or "open time") and a short curing time (the time required to reach a predetermined strength). However, long open time typically necessitates a slow overall rate of productivity during manufacturing.

Sulfur-containing polymers are known to be well-suited for use in sealants (e.g., aerospace sealants) due to their fuel-resistant nature upon crosslinking. Such crosslinking can be carried out, for example, by reaction of a thiol-terminated sulfur-containing compound with a poly-ene in the presence of a free-radical initiator. The free-radical initiator can be a free-radical photoinitiator as described in U. S. Pat. Appl. Publ. Nos. 2012/0040103 (Keledjian et al.) and 2016/0032058 (Ye et al.) or PCT Publ. No. WO 2013/090988 A1 (Bateman et al.), or it can be a thermal free-radical initiator (e.g., peroxide) as described in WO 2016/106352 A1 (Ye et al.).

While photoinitiators can provide a long open time, rapid cure, and "cure on demand", they are generally not well suited for situations in which the uncured sealant is in shadow (e.g., between opaque substrates and/or if the uncured sealant is highly filled with an opaque filler). On the other hand, while thermal initiators can provide curing in shadow regions of curable sealant compositions, problems with excessive cure time and inadequate shelf stability often exist. This is especially important in aviation and aerospace applications where structural integrity of the cured sealant is very important.

### SUMMARY

Thiol-ene curable compositions typically are notable for their reported insensitivity to oxygen inhibition that can result in inadequate surface curing. However, the present inventors have found that in photocured sealant compositions containing polythiols and polyvinyl compounds, inadequate surface cure is a chronic problem. The present inventors have overcome this problem by combining a thermal initiator, including an organoborane-amine complex and a peroxide, with a photoinitiator in thiol-ene-based sealant compositions, thereby providing satisfactory open time, on-demand curing, and effective shadow curing. Unexpectedly, a decomplexing agent for the organoborane-amine complex is typically not required.

Accordingly, in a first aspect, the present disclosure provides a curable sealant composition comprising components:
a) x weight percent of at least one polythiol;
b) y weight percent of at least one unsaturated compound having at least two non-aromatic carbon-carbon double bonds, at least one carbon-carbon triple bond, or a combination thereof;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

In another aspect, the present disclosure provides a two-part curable sealant composition comprising a Part A composition and a Part B composition, wherein:
the Part A composition comprises at least one polythiol; and
the Part B composition comprises at least one unsaturated compound having at least two non-aromatic carbon-carbon double bonds, at least one carbon-carbon triple bond, or a combination thereof, wherein the Part A composition and the Part B composition collectively comprise components:
   a) x weight percent of the at least one polythiol;
   b) y weight percent of the at least one unsaturated compound;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

In another aspect, the present disclosure provides a method of making a curable sealant composition, the method comprising:
providing a two-part curable sealant composition comprising a Part A composition and a Part B, wherein:
the Part A composition comprises at least one polythiol; and
the Part B composition comprises at least one unsaturated compound having at least two non-aromatic carbon-carbon double bonds, at least one carbon-carbon triple bond, or a combination thereof, wherein the Part A composition and the Part B composition collectively comprise components:
   a) x weight percent of the at least one polythiol;
   b) y weight percent of at least one unsaturated compound;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e); and
combining at least a portion of the Part A composition with at least a portion of the Part B composition to provide a curable sealant composition.

In yet another aspect, the present disclosure provides a method of sealing a substrate, the method comprising:
i) applying a curable sealant composition to a surface of the substrate, wherein the curable sealant composition comprises components:
   a) x weight percent of the at least one polythiol;
   b) y weight percent of at least one unsaturated compound having at least two non-aromatic carbon-carbon double bonds, at least one carbon-carbon triple bond, or a combination thereof;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e);
ii) exposing at least a portion of the at least one photoinitiator to actinic electromagnetic radiation; and
iii) curing the curable sealant composition throughout its bulk.

In another aspect, the present disclosure provides a seal cap (e.g., suitable for sealing a fastener) comprising:
a cap which defines an interior that is open at one end; and
curable sealant composition disposed within the interior of the seal cap, wherein the curable sealant composition comprises components:
   a) x weight percent of at least one polythiol;
   b) y weight percent of at least one unsaturated compound having at least two non-aromatic carbon-carbon double bonds, at least one carbon-carbon triple bond, or a combination thereof;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).cap.

As used herein:

The term "flowable" means capable of flow at ambient temperature (e.g., 21°C)

The term "vinyl" refers to -CH=CH₂.

Features and advantages of the present disclosure will be further understood upon consideration of the detailed description as well as the appended claims.

### BRIEF DESCRIPTION OF THE DRAWING

FIG. 1 is a perspective depiction of exemplary seal cap 100 according to the present disclosure.
FIG. 2 is a schematic cross-sectional side view of exemplary seal cap 100.

Repeated use of reference characters in the specification and drawings is intended to represent the same or analogous features or elements of the disclosure.

The figures may not be drawn to scale.

### DETAILED DESCRIPTION

Curable sealant compositions according to the present disclosure rely on chemical reactions known as thiol-ene and thiol-yne reactions between a thiol and an unsaturated functional group such as an non-aromatic carbon-carbon double bond or a carbon-carbon triple bond.

The thiol-ene reaction is a reaction between a thiol and an alkene to form an alkyl sulfide 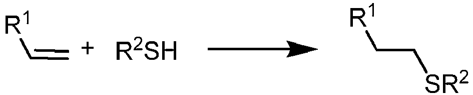 wherein R¹ and R² represent organic groups (e.g., alkyl or aryl).

Likewise, the thiol-yne reaction is a reaction between a thiol and an alkyne to produce an alkenyl sulfide (also known as a vinyl sulfide), as illustrated below:

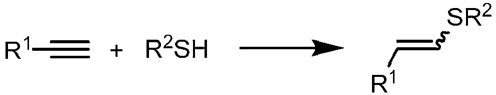

Both reactions are often facilitated by a free-radical initiator and/or UV irradiation. Typically, in a thiol-yne reaction, the first addition of thiol to the alkyne is slower, then a second thiol adds quickly to the vinyl sulfide.

Curable sealant compositions according to the present disclosure may be formulated as one-part curable compositions or as two-part compositions (e.g., a kit) in which the curable sealant composition is divided into two parts, each containing different reactants, thereby preventing premature curing. In use, the two parts (often termed Part A and Part B) are combined to form the corresponding one-part composition, which then cures.

Curable sealant compositions (one-part and two-part) according to the present disclosure comprise components a) - e) as described below. The total amounts of components a) - e) is 100 weight percent. The amount of each component a) - e) is expressed in weight percent as 100 x the ratio of the weight of that component divided by the total weight of components a) - e).

Component a) includes at least one polythiol. Component b) includes at least one unsaturated compound having at least two non-aromatic carbon-carbon double bonds, at least one carbon-carbon triple bond, or a combination thereof. Collectively, the total amount of components a) and b) is in the range of 72 to 99 weight percent, based on the total weight of the components a) - e).

In some preferred embodiments, component a) is present in an amount of from 70 to 98 weight percent, preferably 80 to 95 weight percent, and component b) is present in an amount of 2 to 20 weight percent, preferably 3 to 15 weight percent, and more preferably 3 to 10 weight percent, based on the total weight of the components a) - e).

In some preferred embodiments, component a) is present in an amount of 2 to 20 weight percent, preferably 3 to 15 weight percent, and more preferably 3 to 10 weight percent, and component b) is present in an amount of from 70 to 98 weight percent, preferably 80 to 95 weight percent, based on the total weight of the components a) - e).

Useful polythiols are organic compounds having at least two (e.g., at least 2, at least 3, at least 4, or even at least 6) thiol groups.

Generally, in order to achieve chemical crosslinking between polymer chains in the resulting sealant composition, at least one of the polythiol(s) in component a) and/or at least one of the unsaturated compound(s) in component b) has an average equivalent functionality of at least 2, although this is not a requirement. For example, at least one of the polythiol(s) has three or more -SH groups and/or at least one of the unsaturated compound(s) has three or more terminal vinyl groups.

The stoichiometry of components a) and b) expressed as a ratio of -SH groups / vinyl groups preferably is in the range of 0.8 to 1.2, preferably 0.9 to 1.1, and more preferably 0.95 to 1.05, although this is not a requirement.

A variety of polythiols having at least two thiol groups are useful in the method according to the present disclosure. In some embodiments, the polythiol may be an alkylene, arylene, alkylarylene, arylalkylene, or alkylenearylalkylene having at least two mercaptan groups, wherein any of the alkylene, alkylarylene, arylalkylene, or alkylenearylalkylene are optionally interrupted by one or more oxa (i.e., -O-), thia (i.e., -S-), or imino groups (i.e., -NR³- wherein R³ is a hydrocarbyl group or H), and optionally substituted by alkoxy or hydroxyl.

Examples of useful dithiols include 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethyl sulfide, methyl-substituted dimercaptodiethyl sulfide, dimethyl-substituted dimercaptodiethyl sulfide, dimercaptodioxaoctane, 1,5-dimercapto-3-oxapentane,benzene-1,2-dithiol, benzene-1,3-dithiol, benzene-1,4-dithiol, and tolylene-2,4-dithiol. Examples of polythiols having more than two mercaptan groups include propane-1,2,3-trithiol; 1,2-bis[(2-mercaptoethyl)thio]-3-mercaptopropane; tetrakis(7-mercapto-2,5-dithiaheptyl)methane; and trithiocyanuric acid.

Also useful are polythiols formed from the esterification of polyols with thiol-containing carboxylic acids or their derivatives. Examples of polythiols formed from the esterification of polyols with thiol-containing carboxylic acids or their derivatives include those made from the esterification reaction between thioglycolic acid or 3-mercaptopropionic acid and several polyols to form the mercaptoacetates or mercaptopropionates, respectively.

Examples of polythiol compounds preferred because of relatively low odor level include, but are not limited to, esters of thioglycolic acid, α-mercaptopropionic acid, and β-mercaptopropionic acid with polyhydroxy compounds (polyols) such as diols (e.g., glycols), triols, tetraols, pentaols, and hexaols. Specific examples of such polythiols include, but are not limited to, ethylene glycol bis(thioglycolate), ethylene glycol bis(β-mercaptopropionate), trimethylolpropane tris(thioglycolate), trimethylolpropane tris(β-mercaptopropionate) and ethoxylated versions, pentaerythritol tetrakis(thioglycolate), pentaerythritol tetrakis(β-mercaptopropionate), and tris(hydroxyethyl)isocyanurate tris(β-mercaptopropionate). However, in those applications where concerns about possible hydrolysis of the ester exists, these polyols are typically less desirable.

Suitable polythiols also include those commercially available as THIOCURE PETMP (pentaerythritol tetra(3-mercaptopropionate)), TMPMP (trimethylolpropane tri(3-mercaptopropionate)), ETTMP (ethoxylated trimethylolpropane tri(3-mercaptopropionate) such as ETTMP 1300 and ETTMP 700), GDMP glycol di(3-mercaptopropionate), TMPMA (trimethylolpropane tri(mercaptoacetate)), TEMPIC (tris[2-(3-mercaptopropionyloxy)ethyl] isocyanurate), and PPGMP (propylene glycol 3-mercaptopropionate) from Bruno Bock Chemische Fabrik GmbH & Co. KG. A specific example of a polymeric polythiol is polypropylene-ether glycol bis(β-mercaptopropionate), which is prepared from polypropylene-ether glycol (e.g., PLURACOL P201, Wyandotte Chemical Corp.) and β-mercaptopropionic acid by esterification.

Suitable polythiols also include those prepared from esterification of polyols with thiol-containing carboxylic acids or their derivatives, those prepared from a ring-opening reaction of epoxides with H₂S (or its equivalent), those prepared from the addition of H₂S (or its equivalent) across carbon-carbon double bonds, polysulfides, polythioethers, and polydiorganosiloxanes. Specifically, these include the 3-mercaptopropionates (also referred to as β-mercaptopropionates) of ethylene glycol and trimethylolpropane (the former from Chemische Fabrik GmbH & Co. KG, the latter from Sigma-Aldrich); POLYMERCAPTAN 805C (mercaptanized castor oil); POLYMERCAPTAN 407 (mercaptohydroxy soybean oil) from Chevron Phillips Chemical Co. LLP, and CAPCURE, specifically CAPCURE 3-800 (a polyoxyalkylenetriol with mercapto end groups of the structure R³[O(C₃H₆O)ₙCH₂CH(OH)CH₂SH]₃ wherein R³ represents an aliphatic hydrocarbon group having 1-12 carbon atoms and n is an integer from 1 to 25), from Gabriel Performance Products, Ashtabula, Ohio, and GPM-800, which is equivalent to CAPCURE 3-800, also from Gabriel Performance Products.

Examples of oligomeric or polymeric polythioethers useful for practicing the present disclosure are described, for example, in U.S. Pat. Nos. 4,366,307 (Singh et al.), 4,609,762 (Morris et al.), 5,225,472 (Cameron et al.), 5,912,319 (Zook et al.), 5,959,071 (DeMoss et al.), 6,172,179 (Zook et al.), and 6,509,418 (Zook et al.).

In some embodiments, the polythiol in the method according to the present disclosure is oligomeric or polymeric. Examples of useful oligomeric or polymeric polythiols include polythioethers and polysulfides. Polythioethers include thioether linkages (i.e., -S-) in their backbone structures. Polysulfides include disulfide linkages (i.e., -S-S-) in their backbone structures.

Polythioethers can be prepared, for example, by reacting dithiols with dienes, diynes, divinyl ethers, diallyl ethers, ene-ynes, alkynes, or combinations of these under free-radical conditions. Useful dithiols include any of the dithiols listed above. Examples of suitable divinyl ethers include divinyl ether, ethylene glycol divinyl ether, butanediol divinyl ether, hexanediol divinyl ether, diethylene glycol divinyl ether, triethylene glycol divinyl ether, tetraethylene glycol divinyl ether, cyclohexanedimethanol divinyl ether, polytetrahydrofuryl divinyl ether, and combinations of any of these. Useful divinyl ethers of formula CH₂=CHO(R³O)ₘCH=CH₂, in which m is a number from 0 to 10, R³ is C₂ to C₆ branched alkylene. Such compounds can be prepared by reacting a polyhydroxy compound with acetylene. Examples of compounds of this type include compounds in which R³ is an alkyl-substituted methylene group such as -CH(CH₃)- (e.g., those obtained from BASF, Florham Park, New Jersey, under the trade designation "PLURIOL", for which R³ is ethylene and m is 3.8) or an alkyl-substituted ethylene (e.g., -CH₂CH(CH₃)- such as those obtained from International Specialty Products of Wayne, New Jersey, under the trade designation "DPE" (e.g., DPE-2 and DPE-3). Examples of other suitable dienes, diynes, and diallyl ethers include 4-vinyl-1-cyclohexene, 1,5-cyclooctadiene, 1,6-heptadiyne, 1,7-octadiyne, and diallyl phthalate. Small amounts of trifunctional compounds (e.g., triallyl-1,3,5-triazine-2,4,6-trione, 2,4,6-triallyloxy-1,3,5-triazine) may also be useful in the preparation of oligomers.

Examples of oligomeric or polymeric polythioethers useful for practicing the present disclosure are described, for example, in U.S. Pat. Nos. 4,366,307 (Singh et al.), 4,609,762 (Morris et al.), 5,225,472 (Cameron et al.), 5,912,319 (Zook et al.), 5,959,071 (DeMoss et al.), 6,172,179 (Zook et al.), and 6,509,418 (Zook et al.). In some embodiments, the polythioether is represented by formula HSR⁴[S(CH₂)₂O[R⁵O]ₘ(CH₂)₂SR⁴]ₙSH, wherein each R⁴ and R⁵ is independently a C₂₋₆ alkylene, wherein alkylene may be straight-chain or branched, C₆₋₈ cycloalkylene, C₆₋₁₀ alkylcycloalkylene, -[(CH₂)ₚX]_{q}(CH₂)ᵣ in which at least one -CH₂- is optionally substituted with a methyl group, X is one selected from the group consisting of O, S and -NR⁶-, where R⁶ denotes hydrogen or methyl, m is a number from 0 to 10, n is a number from 1 to 60, p is an integer from 2 to 6, q is an integer from 1 to 5, and r is an integer from 2 to 10. Polythioethers with more than two mercaptan groups may also be useful.

Polythioethers can also be prepared, for example, by reacting dithiols with diepoxides, which may be carried out by stirring at room temperature, optionally in the presence of a tertiary amine catalyst (e.g., 1,4-diazabicyclo[2.2.2]octane (DABCO)). Useful dithiols include any of those described above. Useful epoxides can be any of those having two epoxide groups. In some embodiments, the diepoxide is a bisphenol diglycidyl ether, wherein the bisphenol (i.e., -OC₆H₅CH₂C₆H₅O-) may be unsubstituted (e.g., bisphenol F), or either of the phenyl rings or the methylene group may be substituted by halogen (e.g., fluoro, chloro, bromo, iodo), methyl, trifluoromethyl, or hydroxymethyl. Polythioethers prepared from dithiols and diepoxides have pendent hydroxyl groups and can have structural repeating units represented by formula -SR⁴SCH₂CH(OH)CH₂OC₆H₅CH₂C₆H₅OCH₂CH(OH)CH₂SR⁴S-, wherein R⁴ is as defined above, and the bisphenol (i.e., -OC₆H₅CH₂C₆H₅O-) may be unsubstituted (e.g., bisphenol F), or either of the phenyl rings or the methylene group may be substituted by halogen (e.g., fluoro, chloro, bromo, iodo), methyl, trifluoromethyl, or hydroxymethyl. Mercaptan terminated polythioethers of this type can also be reacted with any of the dienes, diynes, divinyl ethers, diallyl ethers, and ene-ynes listed above under free-radical polymerization conditions.

Other useful polythiols can be formed from the addition of hydrogen sulfide (H₂S) (or its equivalent) across carbon-carbon double bonds. For example, dipentene and triglycerides which have been reacted with H₂S (or its equivalent). Specific examples include dipentene dimercaptan and those polythiols available as POLYMERCAPTAN 358 (mercaptanized soybean oil) and POLYMERCAPTAN 805C (mercaptanized castor oil) from Chevron Phillips Chemical Co. LLP. At least for some applications, the preferred polythiols are POLYMERCAPTAN 358 and 805C since they are produced from largely renewable materials, i.e., the triglycerides, soybean oil and castor oil, and have relatively low odor in comparison to many thiols. Useful triglycerides have at least 2 sites of unsaturation, i.e., carbon-carbon double bonds, per molecule on average, and sufficient sites are converted to result in at least 2 thiols per molecule on average. In the case of soybean oil, this requires a conversion of approximately 42 percent or greater of the carbon-carbon double bonds, and in the case of castor oil this requires a conversion of approximately 66 percent or greater of the carbon-carbon double bonds. Typically, higher conversion is preferred, and POLYMERCAPTAN 358 and 805C can be obtained with conversions greater than approximately 60 percent and 95 percent, respectively. Useful polythiols of this type also include those derived from the reaction of H₂S (or its equivalent) with the glycidyl ethers of bisphenol A epoxy resins, bisphenol F epoxy resins, and novolak epoxy resins. A preferred polythiol of this type is QX11, derived from bisphenol A epoxy resin, from Japan Epoxy Resins (JER) as EPOMATE. Other polythiols suitable include those available as EPOMATE QX10 and EPOMATE QX20 from JER.

Still other useful polythiols are polysulfides that contain thiol groups such as those available as THIOKOL LP-2, LP-3, LP-12, LP-31, LP-32, LP-33, LP-977, and LP-980 from Toray Fine Chemicals Co., Ltd., and polythioether oligomers and polymers such as those described in PCT Publ. No. WO 2016130673 A1 (DeMoss et al.).

Combinations of polythiols may be used. Preferred combinations include miscible mixtures, although this is not a requirement.

Component b) includes at least one unsaturated compound having at least two non-aromatic carbon-carbon double bonds, at least one carbon-carbon triple bond, or a combination thereof. In some preferred embodiments, the non-aromatic carbon-carbon double bonds correspond to vinyl groups.

In some embodiments, the unsaturated compounds are represented by the general formula: 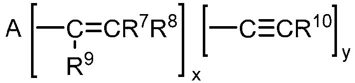 wherein:
A represents an x + y valent organic group (e.g., preferably consisting of C and H, but optionally substituted by hydroxy, alkoxy, aryloxy, carbonyl, acyloxy, carboalkoxy, and sulfur-based derivatives thereof, optionally substituted by one or more of S, N, and P), having from 1 to 8, 12, 18, 22, or even 30 carbon atoms;
each R⁷, R⁸, R⁹, and R¹⁰ independently represents H or an organic group (e.g., alkoxy, acyloxy, alkyl, or aryl) having from 1 to 8 carbon atoms (preferably 1 to 4, and more preferably 1 or 2 carbon atoms)), or R⁷ and R⁸ may together form a 5- or 6-membered ring; and
x and y independently represent integers in the range of 0 to 6, wherein 1 ≤ x + y ≤ 6 with the proviso that if y = 0 then x ≥ 2.

Examples of suitable unsaturated compounds include, for example: unsaturated hydrocarbon compounds having from 5 to 30 carbon atoms (preferably 5 to 18 carbon atoms) such as, for example, include 1,4-pentadiene, 1,5-hexadiene, 1,6-heptadiene, 1,7-octadiene, 1,8-nonadiene, 1,9-decadiene, 1,10-undecadiene, 1,11-dodecadiene, 1,13-tetradecadiene, 1,15-hexadecadiene, 1,17-octadecadiene, 1,19-icosadiene, 1,21-docosadiene, divinylbenzene, dicyclopentadiene, limonene, diallylbenzene, triallylbenzene; polyvinyl ethers having from 4 to 30 carbon atoms (preferably 4 to 18) carbon atoms such as, for example, divinyl ether, ethylene glycol divinyl ether, 1,4-butanediol divinyl ether, 1,6-hexanediol divinyl ether, diethylene glycol divinyl ether, triethylene glycol divinyl ether, tetraethylene glycol divinyl ether, cyclohexanedimethanol divinyl ether, trimethylolpropane trivinyl ether, and pentaerythritol tetravinyl ether, bisphenol A divinyl ether, biphenol F divinyl ether, bisphenol A diallyl ether, bisphenol F diallyl ether; diynes having from 5 to 30 carbon atoms (preferably 5 to 15 carbon atoms) such as, for example, 1,6-heptadiyne; isocyanurates having from 9 to 30 carbon atoms (preferably 9 to 15 carbon atoms) such as, for example, diallyl isocyanurate and triallyl isocyanurate; cyanurates having from 9 to 30 carbon atoms (preferably 9 to 15 carbon atoms) such as, for example, diallyl cyanurate, and triallyl cyanurate; and certain ethenyl and/or ethynyl-substituted polymers such as, for example, polytetrahydrofuryl divinyl ether, polyethylene oxide divinyl ether, polyethylene oxide diallyl ether, polypropylene oxide divinyl ether, polypropylene oxide diallyl ether, and mixtures thereof. Ethenyl and/or ethynyl-substituted polymers may have two, three, four, or more ethenyl (e.g., vinyl) and/or ethynyl (e.g., acetylenyl) pendant group and/or end groups. Compounds having both ethenyl and ethynyl groups may also be used. Combinations of the foregoing may be used.

In some embodiments, the carbon-carbon double and triple bonds are terminal groups in a linear aliphatic compound. In some embodiments, one or more of the carbon-carbon double and triple bonds are contained within carbocyclic ring structures having from 4-10 carbon atoms. In some cases, these ring structure may contain multiple fused or bonded rings or heteroatoms such as O, S or N. When using polythiols having two thiol groups, a mixture of unsaturated compounds may be useful in which at least one unsaturated compound has two carbon-carbon double or triple bonds, and at least one unsaturated compound has at least three carbon-carbon double or triple bonds.

Component c) is from 0.01 to 8 (preferably 0.01 to 8, more preferably 0.25 to 3) weight percent of at least one organoborane-amine complex, based on the total weight of the components a) - e). The organoborane-amine complex is a latent form of an organoborane which is liberated upon decomplexing the base with a compound that reacts with the base, such as an acid or its equivalent. The free organoborane is an initiator capable of initiating free-radical polymerization of the curable sealant composition, for example.

The organoborane portion of the organoborane-amine complex is shown in Formula I (below): 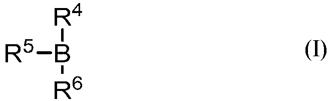 wherein R⁴, R⁵, and R⁶ are organic groups (typically having 30 atoms or less, or 20 atoms or less, or 10 atoms or less). In certain embodiments of Formula I, R⁴ represents an alkyl group having from 1 to 10 carbon atoms, or from 1 to 6 carbon atoms, or from 1 to 5 carbon atoms, or from 1 to 4 carbon atoms, or from 2 to 4 carbon atoms, or from 3 to 4 carbon atoms.

In certain embodiments of Formula I, R⁵ and R⁶ independently represent (i.e., they may be the same or different): alkyl groups having 1 to 10 carbon atoms (or from 1 to 6 carbon atoms, or from 1 to 5 carbon atoms, or from 1 to 4 carbon atoms, or from 2 to 4 carbon atoms, or from 3 to 4 carbon atoms); cycloalkyl groups having 3 to 10 carbon atoms; aryl groups having from 6 to 12 carbon atoms (e.g., phenyl); or aryl groups having from 6 to 12 carbon atoms (e.g., phenyl) substituted with alkyl groups having 1 to 10 carbon atoms (or from 1 to 6 carbon atoms, or from 1 to 5 carbon atoms, or from 1 to 4 carbon atoms, or from 2 to 4 carbon atoms, or from 3 to 4 carbon atoms), or cycloalkyl groups having 3 to 10 carbon atoms. Any two of R⁴, R⁵, and R⁶ groups may optionally be part of a ring (e.g., two groups can combine to form a ring).

The organoborane initiator is complexed with a basic complexing agent (i.e., a base that complexes with the organoborane) to form a stable organoborane-amine complex. The organoborane-amine complex may be represented by Formula II (below): 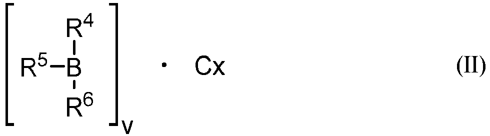 wherein R⁴, R⁵, and R⁶ are as previously defined, and Cx represents a complexing agent selected from a compound having one or more amine groups and optionally one or more alkoxyl groups; and v is a positive number. The value of v is selected so as to render the organoborane-amine complex stable under ambient conditions. For example, when the organoborane-amine complex is stored in a capped vessel at about 20 to 22°C and under otherwise ambient conditions (i.e., the vessel is capped in an ambient air environment and not under vacuum or an inert atmosphere), the complex remains useful as an initiator for at least two weeks. Preferably, the complexes may be readily stored under these conditions for many months, and up to a year or more. In certain embodiments, the value of v is typically at least 0.1, or at least 0.3, or at least 0.5, or at least 0.8, or at least 0.9 and, up to 2, or up to 1.5, or up to 1.2. In some embodiments, v is in a range of 0.1 to 2, or in a range of 0.5 to 1.5, or in a range of 0.8 to 1.2, or in a range of 0.9 to 1.1, or 1.

In Formulas I and II, an alkyl group may be straight chain or branched. In certain embodiments, a ring formed by two groups of R⁴, R⁵, and R⁶ may be bridged by the boron atom in Formula I or Formula II.

In preferred embodiments, the organoborane-amine complex does not include a thiol group.

Exemplary preferred organoboranes of the organoborane-amine complexes are trimethylborane, triethylborane, tri-*n*-propylborane, triisopropylborane, tri-*n*-butylborane, triisobutylborane, and tri-*sec-*butylborane.

Useful basic complexing agents (Cx) include, for example, amines, aminoalcohols, aminoethers and compounds that contain a combination of such functionality (e.g., an amino group and an alkoxy group). Sufficient complexing agent is provided to ensure stability of the organoborane-amine complex under ambient conditions. Insufficient complexing agent could leave free organoborane, a material that tends to be pyrophoric. In practice, to ensure stability of the complex at ambient conditions, the compound that serves as the complexing agent is often in excess, i.e., some of the compound is free or not complexed in the composition. The amount of excess basic complexing agent is chosen to ensure stability of the complex under ambient conditions while still achieving desired performance such as cure rate of the polymerizable composition and mechanical properties of the cured composition. For example, there may be up to 100 percent molar excess, or up to 50 percent molar excess, or up to 30 percent molar excess of the basic complexing agent relative to the organoborane. Often, there is 10 to 30% molar excess of the basic complexing agent relative to the organoborane.

Useful basic complexing agents include, for example, amines and aminoethers. The amine compounds may have primary and/or secondary amino group(s), for example.

Amine complexing agents (Cx) may be provided by a wide variety of materials having one or more primary (typically preferred) or secondary amine groups, including blends of different amines. Amine complexing agents may be a compound with a single amine group or may be a polyamine (i.e., a material having multiple amine groups such as two or more primary, secondary, or tertiary amine groups). Suitable polyamines preferably have at least one amine group that is a primary and/or secondary amine group.

The organoborane-amine complex may be readily prepared using known techniques, as described, for example, in U. S. Pat. Nos. 5,616,796 (Pocius et al.), 5,621,143 (Pocius), 6,252,023 (Moren), 6,410,667 (Moren), and 6,486,090 (Moren).

Suitable organoborane-amine complexes are available from suppliers such as BASF and AkzoNobel. TEB-DAP (triethylborane-1,3-diaminopropane (or 1,3-propanediamine) complex), TnBB-MOPA (tri-n-butylborane-3-methoxypropylamine complex), TEB-DETA (triethylborane-diethylenetriamine complex), TnBB-DAP (tri-*n*-butylborane-1,3-diaminopropane complex), and TsBB-DAP (tri-*sec*-butylborane-1,3-diaminopropane complex) are all available from BASF (Ludwigshafen, Germany). TEB-HMDA (triethylborane-hexamethylenediamine (also 1,6-hexanediamine or 1,6-diaminohexane) complex) is available from AkzoNobel, Amsterdam, The Netherlands.

The organoborane-amine complex is generally employed in an effective amount, which is an amount large enough to permit reaction (i.e., curing by polymerizing and/or crosslinking) to readily occur to obtain a polymer of sufficiently high molecular weight for the desired end use. If the amount of organoborane produced is too low, then the reaction may be incomplete. On the other hand, if the amount is too high, then the reaction may proceed too rapidly to allow for effective mixing and use of the resulting composition. Useful rates of reaction will typically depend at least in part on the method of applying the composition to a substrate. Thus, a faster rate of reaction may be accommodated by using a high-speed automated industrial applicator rather than by applying the composition with a hand applicator or by manually mixing the composition.

Within these parameters, an effective amount of the organoborane-amine complex is an amount that preferably provides at least 0.003 percent by weight of boron, or at least 0.008 percent by weight of boron, or at least 0.01 percent by weight of boron. An effective amount of the organoborane-amine complex is an amount that preferably provides up to 1.5 percent by weight of boron, or up to 0.5 percent by weight of boron, or up to 0.3 percent by weight of boron. The percent by weight of boron in a composition is based on the total weight of the polymerizable material.

Alternatively stated, an effective amount of the organoborane-amine complex is at least 0.1 percent by weight, or at least 0.5 percent by weight. An effective amount of the organoborane-amine complex is up to 10 percent by weight, or up to 5 percent by weight, or up to 3 percent by weight. The percent by weight of boron in a composition is based on the total weight of the polymerizable material.

A decomplexing agent may be included to activate the organoborane-amine complex, however, it is presently discovered that it is generally not needed; for example, the curable sealant composition may contain less than 1, less than 0.1, or less than 0.01 weight percent of the decomplexing agent, or even be free of the decomplexing agent. As used herein, the term "decomplexing agent" refers to a compound capable of liberating the organoborane from its complexing agent, thereby enabling initiation of the reaction (curing by polymerizing and/or crosslinking) of the polymerizable material of the composition. Decomplexing agents may also be referred to as "activators" or "liberators" and these terms may be used synonymously herein.

Compounds that react quickly with the base or the organoborane-amine complex under mild temperatures are particularly effective decomplexing agents. These may include mineral acids, Lewis acids, carboxylic acids, acid anhydrides, acid chlorides, sulfonyl chlorides, phosphonic acids, isocyanates, aldehydes, 1,3-dicarbonyl compounds, acrylates, and epoxies.

In certain embodiments, the decomplexing agent may be attached to solid particles such as silica, titanium dioxide, alumina, calcium carbonate, and carbon black.

Suitable decomplexing agents may include amine-reactive compounds. The amine-reactive compound liberates organoborane by reacting with the amine, thereby removing the organoborane from chemical attachment with the amine. A wide variety of materials may be used to provide the amine-reactive compound including combinations of different materials. Desirable amine-reactive compounds are those materials that can readily form reaction products with amines at or below room temperature so as to provide a composition such as an adhesive that can be easily used and cured under ambient conditions.

General classes of useful amine-reactive compounds include mineral acids (e.g., hydrochloric acid, sulfuric acid, phosphoric acid, and silicic acid), Lewis acids (e.g., SnCl₄ or TiCl₄), carboxylic acids, acid anhydrides (i.e., organic compounds that have two acyl groups bound to the same oxygen atom), acid chlorides, sulfonyl chlorides, phosphonic acids, phosphinic acids, isocyanates, aldehydes, 1,3-dicarbonyl compounds, acrylates, and epoxies. Compounds that react quickly with amines at mild temperatures, such as acids, acid anhydrides, acid chlorides, sulfonyl chlorides, and isocyanates, are particularly effective decomplexing agents.

In addition, strong acids, such as many mineral acids, may degrade the components of the polymerizable composition before or after reaction, and also can degrade or corrode substrates that the composition may contact. Owing to these facts, carboxylic acids, acid anhydrides, aldehydes, isocyanates, phosphonic acids, and 1,3-dicarbonyl compounds, such as barbituric acid, dimedone, and their derivatives, are typically more versatile and preferred decomplexing agents.

Other useful amine-reactive compounds having at least one anhydride group are copolymers of maleic anhydride, such as the copolymers of maleic anhydride and styrene, the copolymers of maleic anhydride and ethylene or α-olefins, and the copolymers of maleic anhydride and (meth)acrylates. Also, polymeric materials in which maleic anhydride has been grafted onto the polymer to form, for example, succinic anhydride-functional polymers are suitable. Polydiorganosiloxanes that contain anhydrides may also be useful, such as Gelest, Inc. succinic anhydride-terminated polydimethylsiloxane, DMS-Z21.

Examples of aldehydes useful as the amine-reactive compounds that serve as decomplexing agents include: benzaldehyde; *o-, m-* and *p*-nitrobenzaldehyde; 2,4-dichlorobenzaldehyde; *p-*tolylaldehyde; and 3-methoxy-4-hydroxybenzaldehyde. Blocked aldehydes, such as acetals and dialdehydes, may also be used.

Other suitable decomplexing agents may include 1,3-dicarbonyl compounds (e.g., β-ketones), for example, as described in U. S. Pat. No. 6,849,569 (Moren). Exemplary 1,3-dicarbonyl compound decomplexing agents include methyl acetoacetate, ethyl acetoacetate, *t*-butyl acetoacetate, 2-methacryloyloxyethyl acetoacetate, diethylene glycol bis(acetoacetate), polycaprolactone tris(acetoacetate), polypropylene glycol bis(acetoacetate), acetoacetanilide, ethylene bis(acetoacetamide), polypropylene glycol bis(acetoacetamide), acetoacetamide, and acetoacetonitrile. Preferred 1,3-dicarbonyl compounds include dimedone, barbituric acid and their derivatives (e.g., 1,3-dimethylbarbituric acid, 1-phenyl-5-benzylbarbituric acid, and 1-ethyl-5-cyclohexyl-barbituric acid).

If present, the decomplexing agent is typically used in an effective amount (i.e., an amount effective to promote reaction (i.e., curing by polymerizing and/or crosslinking) by liberating the initiator from its complexing agent, but without materially adversely affecting desired properties of the ultimate composition). As recognizable to one of ordinary skill in the art, too much of the decomplexing agent may cause reaction to proceed too quickly. However, if too little decomplexing agent is used, the rate of reaction may be too slow and the resulting polymers may not be of adequate molecular weight for certain applications. A reduced amount of decomplexing agent may be helpful in slowing the rate of reaction if it is otherwise too fast. Thus, within these parameters, the decomplexing agent is typically provided in an amount such that the molar ratio of amine-reactive groups in the decomplexing agent(s) to amino groups in the complexing agent(s) is in the range of 0.5:1.0 to 10.0:1.0, preferably in the range of 0.5: 1.0 to 4.0:1.0, and more preferably 1.0:1.0, although this is not a requirement.

Component d) includes from 0.05 to 10 (preferably 0.05 to 10, more preferably 0.75 to 5) weight percent of at least one organic peroxide, based on the total weight of the components a) - e).

Examples of useful organic peroxides include hydroperoxides (e.g., cumene, tert-butyl or tert-amyl hydroperoxide), dialkyl peroxides (e.g., di-*tert*-butylperoxide, dicumylperoxide, or cyclohexyl peroxide), peroxyesters (e.g., *tert*-butyl perbenzoate, *tert-butyl* peroxy-2-ethylhexanoate, *tert-butyl* peroxy-3,5,5-trimethylhexanoate, *tert-butyl* monoperoxymaleate, or di-*tert*-butyl peroxyphthalate), peroxycarbonates (e.g., *tert*-butylperoxy 2-ethylhexylcarbonate, *tert*-butylperoxy isopropyl carbonate, or di(4-*tert*-butylcyclohexyl) peroxydicarbonate), ketone peroxides (e.g., methyl ethyl ketone peroxide, 1,1-di(*tert*-butylperoxy)cyclohexane, 1,1-di(*tert*-butylperoxy)-3,3,5-trimethylcyclohexane, and cyclohexanone peroxide), and diacylperoxides (e.g., benzoyl peroxide or lauryl peroxide). The organic peroxide may be selected, for example, based on the temperature desired for use of the organic peroxide and compatibility with the monomers. Combinations of two or more organic peroxides may also be useful.

In some embodiments, the second initiator comprises an organic hydroperoxide either alone or in combination with a nitrogen-containing base. Organic hydroperoxides have the general structure R¹⁴OOH, wherein R¹⁴ is an alkyl group, aryl group, arylalkylene group, alkylarylene group, alkylarylenealkylene group, or a combination thereof. Examples of useful organic hydroperoxides include cumene hydroperoxide, *tert-butyl* hydroperoxide, *tert-amyl* hydroperoxide, 1,1,3,3-tetramethylbutyl hydroperoxide, isopropylcumyl hydroperoxide, *p*-menthane hydroperoxide (i.e., 1-methyl-1-(4-methylcyclohexyl)ethyl hydroperoxide), diisopropylbenzene hydroperoxide (e.g., 3,5-diisopropylhydroperoxide). In some embodiments, the organic hydroperoxide includes a ketone peroxide (e.g., methyl ethyl ketone peroxide, acetone peroxide, and cyclohexanone peroxide). While organic hydroperoxides tend to be some of the more stable peroxides and require some of the highest temperatures for thermal initiation, we have found that in the presence of a polythiol and unsaturated compound in the composition of the present disclosure, the organic hydroperoxide can initiate curing at room temperature. In some embodiments, compositions according to the present disclosure further comprise a nitrogen-containing base. In some embodiments, a combination of a nitrogen-containing base and an organic hydroperoxide can be considered a redox initiator. The nitrogen atom(s) in the nitrogen-containing base can be bonded to alkyl groups, aryl groups, arylalkylene groups, alkylarylene, alkylarylenealkylene groups, or a combination thereof. The nitrogen-containing base can also be a cyclic compound, which can include one or more rings and can be aromatic or non-aromatic (e.g., saturated or unsaturated). Cyclic nitrogen-containing bases can include a nitrogen as at least one of the atoms in a 5- or 6-membered ring. In some embodiments, the nitrogen-containing base includes only carbon-nitrogen, nitrogen-hydrogen, carbon-carbon, and carbon-hydrogen bonds. In some embodiments, the nitrogen-containing base can be substituted with at least one of alkoxy, aryl, arylalkylenyl, haloalkyl, haloalkoxy, halogen, nitro, hydroxy, hydroxyalkyl, mercapto, cyano, aryloxy, arylalkyleneoxy, heterocyclyl, or hydroxyalkyleneoxyalkylenyl. In some embodiments, the nitrogen-containing base is a tertiary amine. Examples of useful tertiary amines include triethylamine, dimethylethanolamine, benzyldimethylamine, dimethylaniline, tribenzylamine, triphenylamine, *N*,*N*-dimethyl-*p*-toluidine, *N*,*N*-dimethyl-*o*-toluidine, tetramethylguanidine (TMG), 1,8-diazabicyclo[5.4.0]undec-7-ene (DBU), 1,5-diazabicyclo[4.3.0]non-5-ene (DBN), 1,4-diazabicyclo [2.2.2]octane (DABCO), quinuclidine, 3-quinuclidinol, dimethylaminomethylphenol, tris(dimethylaminomethyl)phenol, *N*,*N*-dihydroxyethyl-*p*-toluidine, *N*,*N-*diisopropylethylamine, and *N*,*N*,*N'*,*N"*,*N*"-pentamethyl-diethylenetriamine. Useful nitrogen-containing bases also include guanidines such as diphenylguanidine (DPG). In some embodiments, the nitrogen-containing base comprises a substituted or unsubstituted nitrogen-containing ring. In some embodiments, the substituted or unsubstituted nitrogen-containing ring has 5 or 6 atoms in the ring. The substituted or unsubstituted nitrogen-containing ring can be aromatic or nonaromatic and can have up to 4 nitrogen atoms in the ring. The ring can optionally include other heteroatoms (e.g., S and O). Substituted aromatic or nonaromatic rings can be substituted by one or more substituents independently selected from the group consisting of alkyl, aryl, arylalkylenyl, alkoxy, haloalkyl, haloalkoxy, halogen, nitro, hydroxy, hydroxyalkyl, mercapto, cyano, aryloxy, arylalkylenoxy, heterocyclyl, hydroxyalkylenoxyalkylenyl, amino, alkylamino, dialkylamino, (dialkylamino)alkylenoxy, and oxo. The alkyl substituent can be unsubstituted or substituted by at least one of alkoxy having up to 4 carbon atoms, halo, hydroxy, or nitro. In some embodiments, the aryl or arylalkylenyl is unsubstituted or substituted by at least one of alkyl having up to 4 carbon atoms, alkoxy having up to 4 carbon atoms, halo, hydroxy, or nitro. In some embodiments, the nitrogen-containing base is a substituted or unsubstituted pyridine, pyrazine, imidazole, pyrazole, tetrazole, triazole, oxazole, thiazole, pyrimidine, pyridazine, triazine, tetrazine, or pyrrole. Any of these may be substituted with halogen (e.g., iodo, bromo, chloro, fluoro), alkyl (e.g., having from 1 to 4, 1 to 3, or 1 to 2 carbon atoms), arylalkylenyl (e.g., benzyl), or aryl (phenyl). In some embodiments, the nitrogen-containing base, is a substituted or unsubstituted imidazole or pyrazole. The imidazole or pyrazole may be substituted with halogen (e.g., iodo, bromo, chloro, fluoro), alkyl (e.g., having from 1 to 4, 1 to 3, or 1 to 2 carbon atoms), arylalkylenyl (e.g., benzyl), or aryl (phenyl). Examples of useful nitrogen-containing rings include 1-benzylimidazole, 1,2-dimethylimidazole, 4-iodopyrazole, 1-methylbenzimidazole, 1-methylpyrazole, 3-methylpyrazole, 4-phenylimidazole, and pyrazole.

Organic peroxides, in some embodiments organic hydroperoxides, can be added in any amount suitable to initiate curing. In some embodiments, the organic peroxide is present in an amount in a range from 0.05 weight percent to about 10 weight percent (in some embodiments, 0.1 weight percent to 5 weight percent, or 0.5 weight percent to 5 weight percent). The organic peroxide and its amount may be selected to provide the composition with a desirable second time period (that is, the length of time a portion of the curable sealant adjacent the surface of the aircraft remains liquid) after it is mixed or thawed. In some embodiments, the composition has an open time of at least 10 minutes, at least 30 minutes, at least one hour, or at least two hours.

Component e) consists of from 0.01 to 10 weight percent (preferably 0.1 to 1.5 weight percent) , based on the total weight of the components a) - e), of a photoinitiator system capable of generating free radicals upon exposure to actinic radiation (preferably electromagnetic radiation). Typically, the actinic radiation will be electromagnetic radiation including wavelengths in the range of 250 to 500 nm, although other wavelengths may be used. In preferred embodiments, the actinic radiation is visible, and preferably contains light in the 400 to 470 nanometer wavelength range (more preferably 440-460 nanometers). The photoinitiator system may include Type-I and/or Type-II photoinitiators, sensitizing dyes, amine synergists, and optionally electron donors (e.g., as in the case of 3-component electron-transfer photoinitiators), for example.

Examples of suitable free-radical photoinitiators include 2-benzyl-2-(dimethylamino)-4'-morpholinobutyrophenone; 1-hydroxycyclohexyl-phenyl ketone; 2-methyl-1-[4-(methylthio)phenyl]-2-morpholinopropan-1-one; 4-methylbenzophenone; 4-phenyl benzophenone; 2-hydroxy-2-methyl-1-phenylpropanone; 1-[4-(2-hydroxyethoxyl)-phenyl]-2-hydroxy-2-methylpropanone; 2,2-dimethoxy-2-phenylacetophenone; 4-(4-methylphenylthio)benzophenone; benzophenone; 2,4-diethylthioxanthone; 4,4'-bis(diethylamino)benzophenone; 2-isopropylthioxanthone; and combinations thereof. Many of these and others are widely available from commercial sources.

Preferably, the photoinitiator system comprises a free-radical photoinitiator that is sensitive to wavelengths in the visible region of the electromagnetic spectrum. Examples of such photoinitiators include acylphosphine oxide derivatives, acylphosphinate derivatives, and acylphosphine derivatives (e.g., phenylbis(2,4,6-trimethylbenzoyl)phosphine oxide (available as OMNIRAD 819 from IGM Resins, St. Charles, Illinois), phenylbis(2,4,6-trimethylbenzoyl)phosphine (e.g., as available as OMNIRAD 2100 from IGM Resins), bis(2,4,6-trimethylbenzoyl)phenylphosphine oxide, 2,4,6-trimethylbenzoyldiphenylphosphine oxide (e.g., as available as OMNIRAD 8953X from IGM Resins), isopropoxyphenyl-2,4,6-trimethylbenzoylphosphine oxide, dimethyl pivaloylphosphonate), ethyl (2,4,6-trimethylbenzoyl) phenyl phosphinate (e.g., as available as OMNIRAD TPO-L from IGM Resins); and , bis(cyclopentadienyl) bis[2,6-difluoro-3-(1-pyrryl)phenyl] titanium (e.g., as available as OMNIRAD 784 from IGM Resins).

While these photoinitiators may have low molar extinction coefficients at 450 nm, they nonetheless are typically sufficiently absorptive to provide sufficient curing using light emitting diode (LED) light sources at the indicated amounts.

Optionally, the curable sealant composition may include one or more basic compounds such as, for example, amines such as 1,4-diazobicyclo[2.2.2]octane (DABCO), 1,2-dimethylimidazole, 3-quinuclidinol, and/or excess amine supplied with the organoborane-amine complex, and/or inorganic bases (e.g., magnesium hydroxide, sodium hydroxide, calcium hydroxide, calcium oxide, and sodium carbonate). If included, typical amounts are 0.1 to 8 weight percent, preferably 0.2 to 2 percent, although this is not a requirement.

In some embodiments, curable sealant compositions useful for practicing the present disclosure comprise at least one adhesion promoter. Adhesion promoter may be present, for example, in an amount of from 0.1 weight percent to 15 weight percent of the curable sealant, preferably less than 5 weight percent, more preferably less than 2 weight percent, or even less than 1 weight percent, based on the total weight of the curable sealant composition.

Examples of adhesion promoters include phenolics, such as a phenolic resin available as METHYLON, epoxy resins such as low molecular weight bisphenol A diglycidyl ethers, organosilanes, such as epoxy-, mercapto- or amino-functional silanes, organotitanates, and organozirconates. Examples of mercaptosilanes useful as adhesion promoters include γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, mercaptomethyltriethoxysilane, and combinations thereof. In some embodiments, useful organosilanes have amino functional groups (e.g., N-2-(aminoethyl)-3-aminopropyltrimethoxysilane and (3-aminopropyl)trimethoxysilane). In some embodiments, useful adhesion promoters have groups polymerizable by, for example, free-radical polymerization. Examples of polymerizable moieties are materials that contain olefinic functionality such as styrenic, vinyl (e.g., vinyltriethoxysilane, vinyltri(2-methoxyethoxy)silane), acrylic and methacrylic moieties (e.g., 3-methacryloxypropyltrimethoxysilane). Some functional silanes useful as adhesion promoters are commercially available, for example, from Momentive Performance Materials, Inc., Waterford, New York, as SILQUEST A-187 and SILQUEST A-1100. Other useful adhesion promoters are known in the art. In some embodiments of mercaptan-functional adhesion promoters, the adhesion promoter has a mercaptan equivalent weight of less than 5000 g/mol, 4000 g/mol, 3000 g/mol, 2000 g/mol, or 1000 g/mol as determined by mercaptan titration so that they may more easily migrate within the curable sealant composition. Other functional adhesion promoters (e.g., amino- or epoxy-silanes) can also have equivalent weights of less than 5000 g/mol, 4000 g/mol, 3000 g/mol, 2000 g/mol, or 1000 g/mol as determined by titration. Many titanate and zirconate coupling agents are commercially available.

Examples of suitable wetting agents include a silicone, modified silicone, silicone acrylate, hydrocarbon solvent, fluorine-containing compound, non-silicone polymer or copolymer such as a copolyacrylate, and mixtures thereof. Examples of nonionic surfactants suitable as wetting agents in the curable sealant compositions disclosed herein include block copolymers of polyethylene glycol and polypropylene glycol, polyoxyethylene (7) lauryl ether, polyoxyethylene (9) lauryl ether, polyoxyethylene (18) lauryl ether, and polyethoxylated alkyl alcohols such as those available, for example, from Air Products and Chemicals Inc., Allentown, Pennsylvania, as SURFYNOL SE-F. Fluorochemical surfactants such as those available under the trade designation FLUORAD from 3M Company of St. Paul, Minnesota, may also be useful. In some embodiments, the curable sealant composition includes at least about 0.001 weight percent, at least about 0.01 weight percent, or at least about 0.02 weight percent of at least one wetting agent and up to about 2 weight percent, up to about 1.5 weight percent, or up to about 1 weight percent of at least one wetting agent, based on the total weight of the curable sealant composition.

Adhesion promoters or wetting agents may be directly incorporated into the curable sealant composition, used as a separate and distinct primer composition that is coated onto the substrate prior to the application of the curable sealant composition or more commonly a combination of both approaches. It should be appreciated that the total amount of adhesion promoter or wetting agent which is used, regardless of whether the technique for adhesion promotion is integral blending or priming or both, should be sufficient to enhance the adhesion of the curable sealant composition to the substrate under all conditions of intended or expected use.

The components of the curable sealant composition (including two-part compositions) may be present in the solvent at any suitable concentration, (e.g., from about 5 percent to about 90 percent by weight based on the total weight of the solution). In some embodiments, each component may be present in a range from 10 to 85 or 25 to 75 percent by weight, based on the total weight of the solution. Illustrative examples of suitable solvents include aliphatic and alicyclic hydrocarbons (e.g., hexane, heptane, and cyclohexane), aromatic solvents (e.g., benzene, toluene, and xylene), ethers (e.g., diethyl ether, glyme, diglyme, and diisopropyl ether), esters (e.g., ethyl acetate and butyl acetate), alcohols (e.g., ethanol and isopropyl alcohol), ketones (e.g., acetone, methyl ethyl ketone, and methyl isobutyl ketone), sulfoxides (e.g., dimethyl sulfoxide), amides (e.g., *N*,*N*-dimethylformamide and *N*,*N*-dimethylacetamide), halogenated solvents (e.g., methylchloroform, 1,1,2-trichloro-1,2,2-trifluoroethane, trichloroethylene, and trifluorotoluene), and mixtures thereof.

Curable sealant compositions useful for practicing the method of the present disclosure can also contain fillers. Conventional inorganic fillers such as silica (e.g., fumed silica), calcium carbonate, aluminum silicate, and carbon black may be useful as well as low density fillers. In some embodiments, the curable sealant disclosed herein includes at least one of silica, hollow ceramic elements, hollow polymeric elements, calcium silicates, calcium carbonate, or carbon black. Silica, for example, can be of any desired size, including particles having an average size above 1 micrometer, between 100 nanometers and 1 micrometer, and below 100 nanometers. Silica can include nanosilica and amorphous fumed silica, for example. Suitable low density fillers may have a specific gravity ranging from about 1.0 to about 2.2 and are exemplified by calcium silicates, fumed silica, precipitated silica, and polyethylene. Examples include calcium silicate having a specific gravity of from 2.1 to 2.2 and a particle size of from 3 to 4 microns (available as HUBERSORB HS-600, J. M. Huber Corp., Edison New Jersey) and fumed silica having a specific gravity of 1.7 to 1.8 with a particle size less than 1 (CAB-O-SIL TS-720, Cabot Corp., Boston, Massachusetts). Other examples include precipitated silica having a specific gravity of from 2 to 2.1 (available as HI-SIL TS-7000, PPG Industries, Pittsburgh, Pennsylvania), and polyethylene having a specific gravity of from 1 to 1.1 and a particle size of from 10 to 20 microns (available as SHAMROCK S-395 Shamrock Technologies Inc.).

Additional fillers include hollow elements such as, for example, organic and inorganic hollow elements. Hollow inorganic elements and hollow organic elements may have one of a variety of useful sizes but typically have a maximum dimension of less than 10 millimeters (mm), more typically less than one mm. The specific gravities of the microspheres range from about 0.1 to 0.7 and are exemplified by microspheres of polyacrylates and polyolefins, and silica microspheres having particle sizes ranging from 5 to 100 microns and a specific gravity of 0.25 (ECCOSPHERES, W. R. Grace & Co.). Other examples include elastomeric particles available, for example, from Akzo Nobel, Amsterdam, The Netherlands, as EXPANCEL, alumina/silica microspheres having particle sizes in the range of 5 to 300 microns and a specific gravity of 0.7 (available as FILLITE, Pluess-Stauffer International), aluminum silicate microspheres having a specific gravity of from about 0.45 to about 0.7 (Z-LIGHT), and calcium carbonate-coated polyvinylidene copolymer microspheres having a specific gravity of 0.13 (DUALITE 6001AE, Pierce & Stevens Corp., Buffalo, New York). Further examples of commercially available materials include glass bubbles marketed by 3M Company, Saint Paul, Minnesota, as 3M GLASS BUBBLES in grades K1, K15, K20, K25, K37, K46, S15, S22, S32, S35, S38, S38HS, S38XHS, S42HS, S42XHS, S60, S60HS, iM30K, iM16K, iM16K-N, iM30K-N, XLD3000, XLD6000, and G-65, and any of the HGS series of 3M GLASS BUBBLES; glass bubbles from Potters Industries, Carlstadt, New Jersey, as Q-CEL HOLLOW SPHERES (e.g., grades 30, 6014, 6019, 6028, 6036, 6042, 6048, 5019, 5023, and 5028); and hollow glass particles from Silbrico Corp., Hodgkins, Illinois, as SIL-CELL (e.g., grades SIL 35/34, SIL-32, SIL-42, and SIL-43). Such fillers, alone or in combination, can be present in a sealant in a range from 10 percent by weight to 55 percent by weight, in some embodiments, 20 percent by weight to 50 percent by weight, based on the total weight of the curable sealant composition. The presence of filler in the curable sealant also has the advantageous effect of increasing the open time of the curable sealant composition in some cases.

Curable sealant compositions useful for practicing the method of the present disclosure can also contain at least one of cure accelerators, colorants (e.g., pigments and dyes), thixotropic agents, and solvents. The solvent can conveniently be any material (e.g., N-methyl-2-pyrrolidone, tetrahydrofuran, ethyl acetate, or those described below) capable of dissolving a component of the curable sealant. Suitable pigments and dyes can include those that do not absorb in the wavelength range that is desirable for curing the composition.

In order to provide long storage shelf life, curable sealant compositions according to the present disclosure may be frozen or provided as two-part compositions, for example.

Two-part curable sealant compositions comprise a Part A composition and a Part B composition, both of which have good shelf life, but when combined have a reduced shelf life. When combining the Part A and Part B compositions effort should be made to mix them well using active (e.g., mechanical stirrer) and/or passive mixing techniques (e.g., static mixer nozzles). In preferred two-part curable sealant compositions, the ingredients of the one-part curable sealant composition are divided into separate containers (e.g., sealed tubes or cartridges) as follows: the Part A composition comprises the at least one polythiol, the Part B composition comprises the at least one unsaturated compound having at least two non-aromatic carbon-carbon double bonds, at least one carbon-carbon triple bond, or a combination thereof, and the remaining ingredients may be present in either composition.

Preferred two-part sealant compositions comprise the components:
a) x weight percent of the at least one polythiol;
b) y weight percent of the at least one unsaturated compound;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

Curable sealant compositions according to the present disclosure can generally be made by simply combining, using mixing techniques well-known in the art, at least a portion of the Part A composition with at least a portion of the Part B composition to provide the curable sealant composition.

In use, a (preferably flowable) curable sealant composition according to the present disclosure is applied to a surface of a substrate and cured. Preferably, the curable sealant composition is formulated to be flowable at the application temperature, however this is not a requirement.

Once applied, the curable composition is exposed to actinic radiation. Examples of suitable sources of actinic radiation include high pressure mercury arc lamps, LED lamps (e.g., similar to those used for dental restorations), xenon flash lamps, and sunlight (e.g., focused sunlight). Exposure times may be from seconds to minutes, although other times may also be used. After exposure, the curable sealant composition cures over time. Advantageously, curable sealant compositions according to the present disclosure typically have satisfactory open/working time, but can be triggered by exposure to light to cause rapid onset of curing. Even though light is used to initiate curing, the other curative(s) present ensures effective curing in areas not exposed to the light.

The curable sealant composition is typically applied to one or more (e.g., two) substrates. Exemplary substrate materials include glass, plastic, metal (e.g., copper, steel, titanium, stainless steel, and aluminum, any of which may be anodized, primed, organic-coated or chromate-coated), composites (e.g., carbon-fiber composites and fiberglass composites), ceramic, and combinations thereof. In some preferred embodiments, the substrate(s) comprises an aircraft or marine vessel component. Exemplary aircraft components include seams or joints between portions of aircraft skin, aircraft fasteners, aircraft windows, aircraft access panels, fuselage protrusions, and aircraft fuel tanks.

Curable sealant compositions in the method according to the present disclosure can be cured into, for example, aviation-fuel-resistant sealants. Aviation-fuel-resistant sealants are widely used by the aircraft industry for many purposes. Commercial and military aircraft are typically built by connecting a number of structural members, such as longitudinal stringers and circular frames. The aircraft skin, whether metal or composite, is attached to the outside of the stringers using a variety of fasteners and adhesives. These structures often include gaps along the seams, joints between the rigidly interconnected components, and overlapping portions of the exterior aircraft skin. The method according to the present disclosure can be useful, for example, for sealing such seams, joints, and overlapping portions of the aircraft skin. The curable sealant composition may be applied, for example, to aircraft fasteners, windows, access panels, and fuselage protrusions. After curing, the resulting sealant disclosed herein may prevent the ingress of weather and may provide a smooth transition between the outer surfaces to achieve desired aerodynamic properties. The method according to the present disclosure may likewise be carried out on interior assemblies to prevent corrosion, to contain the various fluids and fuels necessary to the operation of an aircraft, and to allow the interior of the aircraft (e.g., the passenger cabin) to maintain pressurization at higher altitudes. Among these uses are the sealing of integral fuel tanks and cavities.

Aircraft exterior and interior surfaces, to which sealants may be applied, may include metals such as titanium, stainless steel, and aluminum, and/or composites, any of which may be anodized, primed, organic-coated or chromate-coated. For example, a dilute solution of one or more phenolic resins, organo-functional silanes, titanates or zirconates, and a surfactant or wetting agent dissolved in organic solvent or water may be applied to an exterior or interior surface and dried.

Sealants may optionally be used in combination with a seal cap, for example, over rivets, bolts, or other types of fasteners. A seal cap may be made using a seal cap mold, filled with a curable sealant, and placed over a fastener. The curable sealant may then be cured. In some embodiments, the seal cap and the curable sealant may be made from the same material. For more details regarding seal caps, see, for example, PCT Pub. No. WO2014/172305 (Zook et al.).

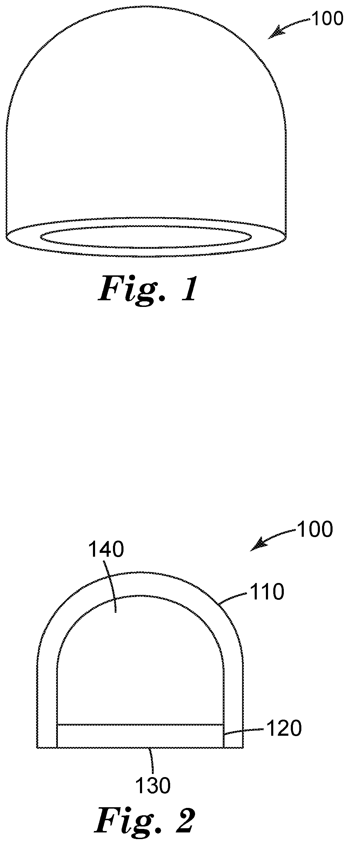

Referring now to FIGS. 1 and 2, seal cap 100 comprises cap 110 defining interior 120 that is open at one end 130. Curable sealant composition 140 according to the present disclosure is disposed within the interior of the seal cap.

The cap can be made of any suitable material. Examples include cured sealant according to the present disclosure, rubber, synthetic elastomers, thermoplastic polymers (e.g., polycarbonate, polyester, acrylics), metal, and combinations thereof. In some embodiments, the cap is partially filled with sealant, while in others, it is completely filled. In some embodiments, the cap is at least partially filled with sealant shortly before use.

In some embodiments, the cap is at least partially filled with sealant and stored in ready-to-use form. In some such embodiments, the seal cap is preferably stored at low temperature, and must be warmed before use. In some embodiments, the cap is at least partially filled with sealant prior to application to a fastener. In some embodiments, the cap is at least partially filled with sealant after application to a fastener, e.g., by syringe, by a sealant port, or the like.

In some embodiments, the seal cap is applied to a fastener after application of sealant to the fastener. In some embodiments, the fastener penetrates a substrate. In some embodiments, the fastener protrudes from a surface of a substrate. In some embodiments, the substrate comprises a composite material. In some embodiments, the substrate comprises an epoxy matrix and glass or carbon fiber composite material. In some embodiments, every portion of the fastener which protrudes from the substrate is covered by cured sealant or seal cap or both. In some embodiments, every portion of the fastener which protrudes from the substrate is covered by cured sealant.

In some embodiments, curable sealant compositions, and cured forms thereof prepared from the method according to the present disclosure may be useful in these applications, for example, because of their fuel resistance and low glass transition temperatures. In some embodiments, the cured sealant prepared according to the present disclosure has a low glass transition temperature, in some embodiments less than -20°C, in some embodiments less than -30°C, in some embodiments less than -40°C, and in some embodiments less than -50°C. In some embodiments, the cured sealant prepared according to the present disclosure has high jet fuel resistance, characterized by a volume swell of less than 30% and a weight gain of less than 20% when measured according to Society of Automotive Engineers (SAE) International Standard AS5127/1.

### SELECT EMBODIMENTS OF THE PRESENT DISCLOSURE

In a first embodiment, the present disclosure provides a curable sealant composition comprising components:
a) x weight percent of at least one polythiol;
b) y weight percent of at least one unsaturated compound having at least two non-aromatic carbon-carbon double bonds, at least one carbon-carbon triple bond, or a combination thereof;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

In a second embodiment, the present disclosure provides a curable sealant composition according to the first embodiment, wherein the curable sealant composition comprises:
a) from 70 to 98 weight percent of the at least one polythiol;
b) from 2 to 20 weight percent of the at least one unsaturated compound;
c) from 0.01 to 8 weight percent of the at least one organoborane-amine complex;
d) from 0.05 to 10 weight percent of the at least one organic peroxide; and
e) from 0.01 to 10 weight percent of the photoinitiator system capable of generating free radicals upon exposure to actinic radiation.

In a third embodiment, the present disclosure provides a curable sealant composition according to the first embodiment, wherein the curable sealant composition comprises:
a) from 80 to 95 weight percent of the at least one polythiol;
b) from 3 to 15 weight percent of the at least one unsaturated compound;
c) from 0.25 to 3 weight percent of the at least one organoborane-amine complex;
d) from 0.75 to 5 weight percent of the at least one organic peroxide; and
e) from 0.1 to 1.5 weight percent of the photoinitiator system capable of generating free radicals upon exposure to actinic radiation.

In a fourth embodiment, the present disclosure provides a curable sealant composition according to any one of the first to third embodiments, further comprising at least one of an adhesion promoter or a wetting agent.

In a fifth embodiment, the present disclosure provides a curable sealant composition according to any one of the first to fourth embodiments, wherein the at least one polythiol comprises an aliphatic polythiol.

In a sixth embodiment, the present disclosure provides a curable sealant composition according to any one of the first to fifth embodiments, wherein the at least one unsaturated compound comprises a compound having at least two vinyl groups.

In a seventh embodiment, the present disclosure provides a curable sealant composition according to any one of the first to sixth embodiments, wherein the photoinitiator system comprises an acylphosphine oxide.

In an eighth embodiment, the present disclosure provides a two-part curable sealant composition comprising a Part A composition and a Part B composition, wherein:
the Part A composition comprises at least one polythiol; and
the Part B composition comprises at least one unsaturated compound having at least two non-aromatic carbon-carbon double bonds, at least one carbon-carbon triple bond, or a combination thereof, wherein the Part A composition and the Part B composition collectively comprise components:
   a) x weight percent of the at least one polythiol;
   b) y weight percent of the at least one unsaturated compound;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

In a ninth embodiment, the present disclosure provides a two-part curable sealant composition according to the eighth embodiment, wherein the components comprise:
a) from 70 to 98 weight percent of the at least one polythiol;
b) from 2 to 20 weight percent of the at least one unsaturated compound;
c) from 0.01 to 8 weight percent of the at least one organoborane-amine complex;
d) from 0.05 to 10 weight percent of the at least one organic peroxide; and
e) from 0.01 to 10 weight percent of the photoinitiator system capable of generating free radicals upon exposure to actinic radiation.

In a tenth embodiment, the present disclosure provides a two-part curable sealant composition according to the eighth embodiment, wherein the components comprise:
a) from 80 to 95 weight percent of the at least one polythiol;
b) from 3 to 10 weight percent of the at least one unsaturated compound;
c) from 0.25 to 3 weight percent of the at least one organoborane-amine complex;
d) from 0.75 to 5 weight percent of the at least one organic peroxide; and
e) from 0.1 to 1.5 weight percent of the photoinitiator system capable of generating free radicals upon exposure to actinic radiation.

In an eleventh embodiment, the present disclosure provides a two-part curable sealant composition according to any one of the eighth to tenth embodiments, further comprising at least one of an adhesion promoter or a wetting agent.

In a twelfth embodiment, the present disclosure provides a two-part curable sealant composition according to any one of the eighth to eleventh embodiments, wherein the at least one polythiol comprises an aliphatic polythiol.

In a thirteenth embodiment, the present disclosure provides a two-part curable sealant composition according to any one of the eighth to twelfth embodiments, wherein the at least one unsaturated compound comprises a compound having at least two vinyl groups.

In a fourteenth embodiment, the present disclosure provides a two-part curable sealant composition according to any one of the eighth to thirteenth embodiments, wherein the at least one photoinitiator comprises an acylphosphine oxide.

In a fifteenth embodiment, the present disclosure provides a method of making a curable sealant composition, the method comprising:
providing a two-part curable sealant composition comprising a Part A composition and a Part B composition, wherein:
the Part A composition comprises at least one polythiol; and
the Part B composition comprises at least one unsaturated compound having at least two non-aromatic carbon-carbon double bonds, at least one carbon-carbon triple bond, or a combination thereof, wherein the Part A composition and the Part B composition collectively comprise components:
   a) x weight percent of the at least one polythiol;
   b) y weight percent of the at least one unsaturated compound;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e); and
combining at least a portion of the Part A composition with at least a portion of the Part B composition to provide a curable sealant composition.

In a sixteenth embodiment, the present disclosure provides a method of sealing a substrate , the method comprising:
i) applying a curable sealant composition to a surface of the substrate, wherein the curable sealant composition comprises components:
   a) x weight percent of the at least one polythiol;
   b) y weight percent of at least one unsaturated compound having at least two non-aromatic carbon-carbon double bonds, at least one carbon-carbon triple bond, or a combination thereof;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e);
ii) exposing at least a portion of the at least one photoinitiator to actinic electromagnetic radiation; and
iii) curing the curable sealant composition throughout its bulk.

In a seventeenth embodiment, the present disclosure provides a method of sealing a substrate according to the sixteenth embodiment, further comprising at least one of an adhesion promoter or a wetting agent.

In an eighteenth embodiment, the present disclosure provides a method of sealing a substrate according to any one of the fifteenth to seventeenth embodiments, wherein the adhesion promoter comprises a coupling agent.

In a nineteenth embodiment, the present disclosure provides a method of sealing a substrate according to any one of the fifteenth to eighteenth embodiments, wherein the substrate comprises an aircraft component.

In a twentieth embodiment, the present disclosure provides a method of sealing a substrate according to any one of the fifteenth to nineteenth embodiments, wherein the curable sealant composition is applied to a seam or joint between portions of aircraft skin.

In a twenty-first embodiment, the present disclosure provides a method of sealing a substrate according to any one of the fifteenth to twentieth embodiments, wherein the curable sealant composition is applied to at least one of an aircraft fastener, an aircraft window, an aircraft access panel, a fuselage protrusion, or an aircraft fuel tank.

In a twenty-second embodiment, the present disclosure provides a seal cap comprising:
a cap which defines an interior that is open at one end; and
curable sealant composition disposed within the interior of the seal cap, wherein the curable sealant composition comprises components:
   a) x weight percent of at least one polythiol;
   b) y weight percent of at least one unsaturated compound having at least two non-aromatic carbon-carbon double bonds, at least one carbon-carbon triple bond, or a combination thereof;
   c) from 0.01 to 8 weight percent of at least one organoborane-amine complex;
   d) from 0.05 to 10 weight percent of at least one organic peroxide; and
   e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight. Table 1 (below) reports materials and abbreviations used in the Examples.

**TABLE 1**

| ABBREVIATION | DESCRIPTION |
|---|---|
| 3-QN | 3-Quinuclidinol obtained from Alfa Aesar, Ward Hill, Massachusetts |
| GLABUB | Glass bubbles obtained as 3M iM30K HI-STRENGTH GLASS BUBBLES from 3M Company, St. Paul, Minnesota |
| GLABUB2 | Glass bubbles obtained as 3M iM16K HI-STRENGTH GLASS BUBBLES from 3M Company |
| AcOH | Glacial acetic acid obtained from EMD Millipore Corporation, Billerica, Massachusetts |
| AC-X92 | Thiol-terminated polythioether oligomer with the equivalent weight of 1482 g/mol synthesized as described in "Polythioether Example 1" in PCT Publ. No. WO 2016/130673 |
| AR202 | Fumed silica obtained as AEROSIL R202 from Evonik, Essen, Germany |
| A187 | Glycidoxypropyltrimethoxysilane obtained as ANDISIL 187 SILANE from AB Specialty Silicones, Waukegan, Illinois |
| BPBA | 1-Benzyl-5-phenylbarbituric acid obtained from Sigma Aldrich, St. Louis, Missouri |
| Ca(OH)₂ | Calcium hydroxide obtained from Avantor Performance Materials, Inc., Center Valley, Pennsylvania |
| CaO | Calcium oxide obtained from EM Industries, Inc., Cherry Hill, New Jersey |
| CHP | Cumene hydroperoxide, technical grade, obtained from Alfa Aesar, Ward Hill, Massachusetts |
| DABCO | 1,4-diazabicyclo[2.2.2]octane obtained from Alfa Aesar, Ward Hill, Massachusetts |
| DAEBP A | Diallyl ether of bisphenol A obtained from Bimax, Glen Rock, Pennsylvania |
| DCP | Dicyclopentadiene obtained from Alfa Aesar, Ward Hill, Massachusetts |
| DMI | 1,2-Dimethylimidazole obtained from TCI America, Portland, Oregon |
| DS-108 | Solvent obtained from Socomore, Fort Worth, Texas |
| D-E135 | Expanding polymeric microsphere obtained as DUALITE E135-040D from Chase Corporation, Westwood, Massachusetts |
| DVE | Triethylene glycol divinyl ether obtained from BASF Chemical Co., Ludwigshafen, Germany |
| FUMSIL | Fumed silica filler obtained as HDK H2000 from Wacker Chemical Corp., Adrian, Michigan |
| HPD | 1,6-Heptadiyne obtained from GFS Organic Chemicals, Columbus, Ohio |
| OR819 | Phenylbis(2,4,6-trimethylbenzoyl)phosphine oxide obtained as OMNIRAD 819 from IGM resins, St. Charles, Illinois |
| K1003 | Vinyltrimethoxysilane obtained as KBM-1003 from Shin-Etsu Chemical, Tokyo, Japan |
| Na₂CO₃ | Sodium carbonate decahydrate obtained from Alfa Aesar, Ward Hill, Massachusetts |
| PENNCO | Blue pigment (13.5-16.5%) dispersed in acrylic resin obtained under the product code 69S3489 from Penn Color, Inc., Doylestown, Pennsylvania |
| PrBlue | Iron(III) hexacyanoferrate(II) (Prussian blue) obtained from Alfa Aesar, Ward Hill, Massachusetts |
| S322 | Coated calcium carbonate obtained as SOCAL 332 from Solvay Chemicals, Houston, Texas |
| TAC | Triallyl cyanurate obtained from Sartomer, Inc., Exton, Pennsylvania |
| TAIC | Triallyl isocyanurate obtained from Tokyo Chemical Industry Co., Portland, Oregon |
| TBEC | *tert*-Butylperoxy 2-ethylhexyl carbonate obtained from Sigma - Aldrich, St. Louis, Missouri |
| TBPIN | *tert*-Butylperoxy-3,5,5-trimethylhexanoate obtained as TRIGONOX 42S from AkzoNobel, Chicago, Illinois |
| TEB-DAP | Triethylborane 1,3-diaminopropane obtained from BASF Chemical Co., Ludwigshafen, Germany |
| TMPTMP | Trimethylolpropane tris(3-mercaptopropionate) obtained from TCI America, Portland, Oregon |
| TnBB-MOPA | Tri-*n*-butylborane methoxypropylamine obtained from BASF Chemical Co., Ludwigshafen, Germany |
| X0020 | Silicone resin obtained as XIAMETER RSN-0020 from Dow Corning, Midland, Michigan |
| UPF | Precipitated calcium carbonate obtained as ULTRA-PFLEX from Specialty Materials, Inc., Bethlehem, Pennsylvania |
| MEK | Methyl ethyl ketone obtained from Sigma-Aldrich, St. Louis, Missouri |

### TESTMETHODS

All test methods except for the depth of cure test are based on SAE International Aerospace Standard AS5127/1, Rev. C, October 2014, "Aerospace Standard Test Methods for Aerospace Sealants Two-Component Synthetic Rubber Compounds".

### TENSILE STRENGTH AND ELONGATION AT BREAK

Freshly mixed sealant was placed into an open-faced polytetrafluoroethylene (PTFE) mold with cavity dimensions of 3.75 inches × 1.6 inches × 0.125 inch (9.5 cm × 4.1 cm × 0.3 cm). The excess sealant was scraped off with a flat-bladed scraper. The molded sample was then either immediately subjected to the Tensile and Elongation Light Cure Conditions Test Method described below or was kept in the dark. In either case, the sample was allowed to sit in the dark at a specific temperature for a specific amount of time to cure. After the cure time, three tensile specimens were cut from the sheet using a small dog bone-shaped die specified in ASTM D638-14 "Standard Test Method for Tensile Properties of Plastics", Type V. These specimens were tested in accordance to ASTM D638 Type V using a jaw separation rate of 20 inches ± 1 inch per minute (50.8 cm ± 2.5 cm per minute) until specimen breakage. The thickness of each specimen was recorded prior to testing and used to calculate the value of tensile strength. Unless otherwise denoted, the reported values were the averages of the values from three specimens with the uncertainty being the standard deviation of the three values. In some cases (noted individually), the reported values were the averages of the values from two specimens with the uncertainty being one-half the difference between the two values.

### TENSILE AND ELONGATION LIGHT CURE CONDITIONS

For samples that were light cured, the molded sealant sample as prepared in the above section was placed under an AW-240-455F-7 blue LED array (455 nm) attached to a CT-2000 UV-Vis LED power source from Clearstone Technologies, Inc. (Hopkins, Minnesota) and irradiated at 100% power for 30 seconds. The nominal distance between the light array and the sealant surface was 1 inch (2.54 cm).

### TACK-FREE TIME

An aluminum panel with dimensions of 5.75 inches × 2.75 inches × 0.038 inch (14.6 cm × 7.0 cm × 1 mm) was treated with a 3% XIAMETER RSN-0020 silicone (X0020, Dow Corning, Midland, Michigan) in MEK, and allowed to dry for 1 minute at room temperature. The panel was then coated with freshly mixed sealant at a thickness of approximately 0.125 inch (3.2 mm) (with the help of a jig and a flat-bladed scraper). This panel was placed on a rack in a dark cabinet in a constant temperature and humidity room (77 °F (21 °C), 50% relative humidity (RH)) for a specified time. At various time points, a 1 inch × 7 inches × 0.005 inch (2.5 cm × 17.8 cm × 0.1 mm) strip of low-density polyethylene (that had been previously cleaned with DS-108 solvent and dried with cloth wipes) was applied to the surface of the sealant such that there was intimate contact. The polyethylene film was held in place for 2 minutes with a calibrated block designed to apply 0.5 oz/in² (215 Pa) of pressure to the surface. The strip of film was then slowly and evenly peeled back at a right angle to the sealant surface. If the film came away clean and free of sealant, the test was considered a "Pass."

For samples cured in a DAC cup, tack-free time was judged by removing the sample from the DAC cup and pressing firmly on the top surface while wearing a nitrile glove. If no material stuck to the nitrile glove, the samples was judged to be tack-free. If material did stick to the nitrile glove, it was judged to be tacky, and the sample was allowed to sit on a table top for additional time before testing again by pressing firmly on the top surface while wearing a clean nitrile glove. Once no material would stick to the glove, the sample was judged tack free.

### HARDNESS MEASUREMENTS

The instantaneous Shore A hardness was determined in accordance with ASTM D2240 using a Type A Model 2000 Durometer from Rex Gauge Company (Buffalo Grove, Illinois) after the sealant was allowed to cure under the given conditions. The reading was taken on two 0.125 inch (3.2 mm) thick specimens, stacked back to back (for a "Top Hardness" measurement) or front to front (for a "Bottom Hardness" measurement). In the case of Light Cure Hardness, the specimens were stacked without regard to top and bottom. If the thickness was less than 0.125 inch (3.2 mm), as occurred when measuring the hardness of dogbone-shaped tensile specimens, three pieces were stacked without regard to top and bottom to obtain a total thickness if at least 0.25 inch (6.4 mm). In these cases of multiple stacking, the top and bottom hardness were not differentiated, but rather a single hardness value was recorded.

### SAMPLE PREPARATION FOR LIGHT CURE HARDNESS MEASUREMENTS

Freshly mixed sealant was placed into an open-faced polytetrafluoroethylene (PTFE) mold with cavity dimensions of 3.75 inches × 1.6 inches × 0.125 inch (9.5 cm × 4.1 cm × 0.3 cm). The excess sealant was scraped off with a flat-bladed scraper. The molded sample was then immediately subjected to the Tensile and Elongation Light Cure Conditions Test Method. Following this, it was allowed to sit in the dark for the specified amount of time. When a measurement was to be taken, the piece of cured sealant was cut in half and the two pieces were stacked without regard to top and bottom for a total thickness of ~ 0.25 inch (0.6 cm). The instantaneous Shore A hardness was determined in accordance with ASTM D2240 using a Type A Model 2000 Durometer from Rex Gauge Company.

### SAMPLE PREPARATION FOR DARK CURE HARDNESS MEASUREMENTS

An aluminum panel with dimensions of 5.75 inches × 2.75 inches × 0.038 inch (14.6 cm × 7.0 cm × 1 mm) was treated with a 3% XIAMETER RSN-0020 silicone (X0020, Dow Corning, Midland, MI) in MEK and allowed to dry for 1 minute at room temperature. The panel was then coated with freshly mixed sealant at a thickness of approximately 0.125 inch (3.2 mm) (with the help of a jig and a flat-bladed scraper). This panel was placed on a rack in a dark cabinet in a constant temperature and humidity room (77 °F (21 °C), 50% relative humidity (RH)) for a specified time. Two square pieces of sealant were cut from the cured sheet of sealant and stacked back to back (for a "Dark Cure Top Hardness" measurement) or front to front (for a "Dark Cure Bottom Hardness" measurement). The instantaneous Shore A hardness was determined in accordance with ASTM D2240 using a Type A Model 2000 Durometer from Rex Gauge Company (Buffalo Grove, IL).

### APPLICATIONLIFE

At least 150 grams of freshly mixed sealant was used to fill a TS60C-LD-500 cartridge from Techcon Systems (Cypress, California) (see Figure 1 in SAE International Aerospace Standard AS5127/1, Rev. C), and the time at which mixing was initiated was recorded. The appropriate nozzle (also in Figure 1 in SAE International Aerospace Standard AS5127/1, Rev. C) with an orifice of 0.125 inch (3.2 mm) was attached to the filled cartridge. The cartridge was kept in a constant temperature and humidity room (77°F (21°C), 50% Relative Humidity) throughout the test. The cartridge was attached to an air gun with a constant air supply at a pressure of 90 psi (620 kPa). Initially, 2 to 3 inches (5 to 8 cm) of sealant was extruded from the nozzle to clear any entrapped air. At various time points after the mixing point, the sealant was extruded into a previously weighed weigh boat for the specified time (3 seconds, 5 seconds, 10 seconds, 15 seconds, 30 seconds, or 60 seconds, depending on the test). The weight of sealant extruded was recorded and used to calculate the extrusion rate in grams/minute (g/min). An extrusion rate of 15 g/min or greater signifies that the sealant was still within its application life.

For samples cured in a DAC cup, application life was judged by probing the sample with a wooden dowel. The end of the application life was judged to be the time at which the sample could not be mixed and/or smoothed on a surface.

### DEPTH OF CURE

A 0.25 inch (6.4 mm) deep cylindrical silicone rubber mold was placed on glass slides and loaded with a given sealant sample. Each molded specimen was irradiated with the 3M Blue Light Gun (450 nm LED source, 3M Company, Saint Paul, Minnesota) at a distance of approximately 1 inch (2.5 cm) for 15 seconds. Following this, the uncured material on the bottom side of the sample was scraped away with a spatula, leaving only a cured disc. The underside of the cured disc was quickly irradiated with the light gun for approximately 10 seconds to remove tack, and the thickness of the cured disc was measured with a Fischer Scientific caliper micrometer (Hampton, New Hampshire).

### COMPARATIVE EXAMPLES A to E

Comparative Examples A to E (CEX-A to CEX-E) were prepared according to the formulations listed in Table 2. The DVE/TAC component refers to a solution prepared by adding 3.353 grams (g) of TAC to 4.080 g of DVE and stirring until homogeneous.

Comparative Examples A and B were prepared by adding the AC-X92, DVE/TAC solution, DMI, and UPF to a MAX 10 gram DAC cup (FlackTek, Inc.) and speed mixing at 1600 RPM for 60 seconds (SPEEDMIXER model DAC 400 FVZ, FlackTek, Inc.). The TBPIN and TnBB-MOPA were then added as appropriate, and the resultant mixture was speed mixed at 1600 RPM for an additional 30 seconds.

For Comparative Example C, 0.048 g of DABCO was added to 12.00 g of AC-X92 in a glass jar equipped with a magnetic stirbar, and the mixture was allowed to stir for 24 hours. Of the resultant mixture, 3.012 g was placed in a MAX 10 gram DAC cup along with the DVE/TAC solution and UPF, then speed mixed at 1600 RPM for 60 seconds. The TBPIN and TnBB-MOPA were then added, and the resultant mixture was speed mixed at 1600 RPM for an additional 30 seconds.

For Comparative Example D, 0.048 g DABCO and 0.128 g BPBA were added to 12.000 g AC-X92 in a glass jar equipped with magnetic stirbar, and the mixture was allowed to stir for 24 hours. Of the resultant mixture, 3.044 g was placed in a MAX 10 gram DAC cup along with the DVE/TAC solution and UPF, then speed mixed at 1600 RPM for 60 seconds. The TBPIN and TnBB-MOPA were then added, and the resultant mixture was speed mixed at 1600 RPM for an additional 30 seconds.

Comparative Example E was prepared by adding the AC-X92, DVE/TAC solution, and UPF to a MAX 10 gram DAC cup and speed mixing at 1600 RPM for 60 seconds. The TBPIN and TnBB-MOPA were then added, and the resultant mixture was speed mixed at 1600 RPM for an additional 30 seconds.

The open time and tack free time for Comparative Examples A to E are reported in Table 2.

In Tables 2-5, open time refers to the approximate amount of time that the formulation exhibits sufficient flow such that it can still be manually spread and would be expected to completely wet out a surface to which it is applied.

The tack free time listed in Tables 2-5 was judged by removing the sample from the DAC cup and pressing firmly on it with a finger while wearing a nitrile glove. If any of the sample material was stuck to the glove upon removal of the bulk sample, the sample was judged to still be tacky, and the sample was allowed to sit on a table top for additional time before testing again by pressing firmly on the top surface while wearing a clean nitrile glove. Once no material would stick to the glove, the sample was judged tack free.

**TABLE 2**

| EXAMPLE | AMOUNT, grams | | | | | | | | OPEN TIME, hours | TACK FREE TIME, hours |
|---|---|---|---|---|---|---|---|---|---|---|
| | AC-X92 | DVE/TAC | TBPIN | TnBB-MOPA | DABCO | BPBA | DMI | UPF | | |
| CEX-A | 3.00 | 0.171 | 0.115 | 0 | 0 | 0 | 0.048 | 1.65 | 8.0 | >100 |
| CEX-B | 3.00 | 0.171 | 0.115 | 0.027 | 0 | 0 | 0.048 | 1.65 | 4.0 | 32 |
| CEX-C | 3.00 | 0.171 | 0.115 | 0.027 | 0.012 | 0 | 0 | 1.65 | 3.0 | 24 |
| CEX-D | 3.00 | 0.171 | 0.115 | 0.027 | 0.012 | 0.032 | 0 | 1.65 | 2.5 | 28 |
| CEX-E | 3.00 | 0.171 | 0.115 | 0.027 | 0 | 0 | 0 | 1.65 | 4.5 | 70 |

### COMPARATIVE EXAMPLES F to M

Comparative Examples F to M (CEX-F to CEX-M) were prepared according to the formulations listed in Table 3. The DVE/TAC component refers to a solution which was prepared by adding 3.353 g of TAC to 4.080 g of DVE and stirring until homogeneous.

For Comparative Examples F and H, 0.048 g of DABCO was added to 12.00 g of AC-X92 in a glass jar equipped with a magnetic stirbar, and the mixture was allowed to stir for 24 hours. Of the resultant mixture, 3.012 g was placed in a MAX 10 gram DAC cup along with the DVE/TAC solution and UPF, then speed mixed at 1600 RPM for 60 seconds. The TnBB-MOPA and TBEC were then added as appropriate, and the resultant mixture was speed mixed at 1600 RPM for an additional 30 seconds.

Comparative Examples G, L, and M were prepared by adding the AC-X92, DVE/TAC solution, Ca(OH)₂, and UPF (according to Table 3) to a MAX 10 gram DAC cup and speed mixing at 1600 RPM for 60 seconds. The TnBB-MOPA and TBEC were then added as appropriate, and the resultant mixture was speed mixed at 1600 RPM for an additional 30 seconds.

For Comparative Example I, 0.028 g DABCO and 0.072 g BPBA were added to 12.000 g AC-X92 in a glass jar equipped with magnetic stirbar, and the mixture was allowed to stir for 24 hours. Of the resultant mixture, 3.025 g was placed in a MAX 10 gram DAC cup along with the DVE/TAC solution and UPF, then speed mixed at 1600 RPM for 60 seconds. The TBEC and TnBB-MOPA were then added, and the resultant mixture was speed mixed at 1600 RPM for an additional 30 seconds.

For Comparative Examples J and K, 0.024 g of DABCO was added to 12.00 g of AC-X92 in a glass jar equipped with a magnetic stirbar, and the mixture was allowed to stir for 24 hours. Of the resultant mixture, 3.006 g was placed in a MAX 10 gram DAC cup along with the DVE/TAC solution and UPF, then speed mixed at 1600 RPM for 60 seconds. The TBEC and TnBB-MOPA were then added, and the resultant mixture was speed mixed at 1600 RPM for an additional 30 seconds.

The open time and tack-free time for Comparative Examples F to M are reported in Table 3 (below).

**TABLE 3**

| EXAMPLE | AMOUNT, grams | | | | | | | | OPEN TIME, hours | TACK FREE TIME, hours |
|---|---|---|---|---|---|---|---|---|---|---|
| | AC-X92 | DVE/TAC | TBEC | TnBB-MOPA | DABCO | BPBA | Ca(OH)₂ | UPF | | |
| CEX-F | 3.00 | 0.171 | 0.086 | 0 | 0.012 | 0 | 0 | 1.65 | 1.5 | >100 |
| CEX-G | 3.00 | 0.171 | 0.086 | 0.027 | 0 | 0 | 0 | 1.65 | 29^{∗∗} | 72 |
| CEX-H | 3.00 | 0.171 | 0.086 | 0.027 | 0.012 | 0 | 0 | 1.65 | 1.0 | 29 |
| CEX-I | 3.00 | 0.171 | 0.086 | 0.027 | 0.007 | 0.018 | 0 | 1.65 | 1.0 | 45 |
| CEX-J | 3.00 | 0.171 | 0.086 | 0.027 | 0.006 | 0 | 0 | 1.65 | 1.5 | 20 |
| CEX-K | 3.00 | 0.171 | 0.086 | 0.014 | 0.006 | 0 | 0 | 1.65 | 1.75 | 22 |
| CEX-L | 3.00 | 0.171 | 0.086 | 0 | 0 | 0 | 0.100 | 1.65 | 1.0 | >100 |
| CEX-M | 3.00 | 0.171 | 0.086 | 0.027 | 0 | 0 | 0.100 | 1.65 | 1.0 | 22 |

| | | | | | | | | | | |
|---|---|---|---|---|---|---|---|---|---|---|
| ^{∗∗} The sample had a thin layer of cured material (i.e., skin) on the top surface but remained uncured underneath. | | | | | | | | | | |

### COMPARATIVE EXAMPLES N to V

Comparative Examples N to V (CEX-N to CEX-V) were prepared according to the formulations listed in Table 4. The DAEBPA/TAC component refers to a solution which was prepared by adding 1.70 g of TAC to 8.30 g of DAEBPA and stirring until homogeneous.

For Comparative Examples N and O, 0.048 g of DABCO was added to 12.00 g of AC-X92 in a glass jar equipped with a magnetic stirbar, and the mixture was allowed to stir for 24 hours. Of the resultant mixture, 3.012 g was placed in a MAX 10 gram DAC cup along with the DAEBPA/TAC solution and UPF, then speed mixed at 1600 RPM for 60 seconds. The TnBB-MOPA and TBEC were then added as appropriate, and the resultant mixture was speed mixed at 1600 RPM for an additional 30 seconds.

For Comparative Example P, 0.024 g of DABCO was added to 12.00 g of AC-X92 in a glass jar equipped with a magnetic stirbar, and the mixture was allowed to stir for 24 hours. Of the resultant mixture, 3.006 g was placed in a MAX 10 gram DAC cup along with the DAEBPA/TAC solution and UPF, then speed mixed at 1600 RPM for 60 seconds. The TnBB-MOPA and TBEC were then added, and the resultant mixture was speed mixed at 1600 RPM for an additional 30 seconds.

Comparative Examples Q and R were prepared by adding the AC-X92, DAEBPA/TAC solution, DMI, and UPF according to Table 4 to a MAX 10 gram DAC cup and speed mixing at 1600 RPM for 60 seconds. The TnBB-MOPA and TBPIN were then added as appropriate, and the resultant mixture was speed mixed at 1600 RPM for an additional 30 seconds.

Comparative Examples S and T were prepared by adding the AC-X92, DAEBPA/TAC solution, Ca(OH)2, and UPF according to Table 4 to a MAX 10 gram DAC cup and speed mixing at 1600 RPM for 60 seconds. The TnBB-MOPA and TBEC were then added as appropriate, and the resultant mixture was speed mixed at 1600 RPM for an additional 30 seconds.

Comparative Examples U and V were prepared by adding the AC-X92 DAEBPA/TAC solution, CaO, Na₂CO₃, and UPF according to Table 4 to a MAX 10 gram DAC cup and speed mixing at 1600 RPM for 60 seconds. The TnBB-MOPA and TBEC were then added as appropriate, and the resultant mixture was speed mixed at 1600 RPM for an additional 30 seconds.

The open time and tack free time for Comparative Examples N to V are reported in Table 4 (below).

**TABLE 4**

| EXAMPLE | AMOUNT, grams | | | | | | | | | | OPEN TIME, hours | TACK-FREE TIME, hours |
|---|---|---|---|---|---|---|---|---|---|---|---|---|
| | AC-X92 | DAEBPA /TAC | TnBB-MOPA | DABCO | Ca(OH)₂ | DMI | TBEC | TBPIN | CaO/ Na₂CO₃ | UPF | | |
| CEX-N | 3.00 | 0.250 | 0 | 0.012 | 0 | 0 | 0.086 | 0 | 0 | 1.65 | 3.0 | >100 |
| CEX-O | 3.00 | 0.250 | 0.027 | 0.012 | 0 | 0 | 0.086 | 0 | 0 | 1.65 | 2.5 | 23 |
| CEX-P | 3.00 | 0.250 | 0.014 | 0.006 | 0 | 0 | 0.086 | 0 | 0 | 1.65 | 3.0 | 28 |
| CEX-Q | 3.00 | 0.250 | 0 | 0 | 0 | 0.072 | 0 | 0.173 | 0 | 1.65 | 6.0 | 49 |
| CEX-R | 3.00 | 0.250 | 0.027 | 0 | 0 | 0.072 | 0 | 0.173 | 0 | 1.65 | 5.0 | 23 |
| CEX-S | 3.00 | 0.250 | 0 | 0 | 0.100 | 0 | 0.086 | 0 | 0 | 1.65 | 3.5 | 54 |
| CEX-T | 3.00 | 0.250 | 0.027 | 0 | 0.100 | 0 | 0.086 | 0 | 0 | 1.65 | 3.0 | 23 |
| CEX-U | 3.00 | 0.250 | 0 | 0 | 0 | 0 | 0.086 | 0 | 0.40/0.4 0 | 1.65 | 2.5 | 45 |
| CEX-V | 3.00 | 0.250 | 0.027 | 0 | 0 | 0 | 0.086 | 0 | 0.40/0.4 0 | 1.65 | 2.0 | 26 |

### COMPARATIVE EXAMPLES W to AA

Comparative Examples W to AA (CEX-W to CEX-AA) were prepared according to the formulations listed in Table 5. The DAEBPA/TAC component refers to a solution which was prepared by adding 1.70 g of TAC to 8.30 g of DAEBPA and stirring until homogeneous.

Comparative Examples W and Y were prepared by adding the AC-X92, DAEBPA/TAC solution, and UPF according to Table 5 to a MAX 10 gram DAC cup and speed mixing at 1600 RPM for 60 seconds. The TnBB-MOPA and CHP were then added as appropriate, and the resultant mixture was speed mixed at 1600 RPM for an additional 30 seconds.

For Comparative Examples X, Z, and AA, 0.048 g of DABCO was added to 12.00 g of AC-51 in a glass jar equipped with a magnetic stirbar, and the mixture was allowed to stir for 24 hours. Of the resultant mixture, 3.012 g was placed in a MAX 10 gram DAC cup along with the DAEBPA/TAC solution and UPF according to Table 5, then speed mixed at 1600 RPM for 60 seconds. The TnBB-MOPA and CHP were then added as appropriate, and the resultant mixture was speed mixed at 1600 RPM for an additional 30 seconds.

The open time and tack free time for Comparative Examples W to AA are reported in Table 5 (below).

**TABLE 5**

| EXAMPLE | AMOUNT, grams | | | | | | OPEN TIME, hours | TACK-FREE TIME, hours |
|---|---|---|---|---|---|---|---|---|
| | AC-X92 | DAEBPA/ TAC | TnBB-MOPA | DABCO | CHP | UPF | | |
| CEX-W | 3.00 | 0.250 | 0 | 0 | 0.053 | 1.65 | 1.0 | >100 |
| CEX-X | 3.00 | 0.250 | 0 | 0.012 | 0.053 | 1.65 | 1.0 | >100 |
| CEX-Y | 3.00 | 0.250 | 0.027 | 0 | 0.053 | 1.65 | 2.0 | 56 |
| CEX-Z | 3.00 | 0.250 | 0.027 | 0.012 | 0 | 1.65 | >100 | >100 |
| CEX-AA | 3.00 | 0.250 | 0.027 | 0.012 | 0.053 | 1.65 | 2.0 | 48 |

### SEALANT MIXING

In Examples 1 and 2, freshly mixed sealant was prepared by adding the appropriate amount of Part B to a DAC speed mixing cup (cup size selected as appropriate, FlackTek, Inc., Landrum, South Carolina) containing the appropriate amount of Part A. The sealant was then speed mixed (SPEEDMIXER model DAC 400 FVZ, FlackTek, Inc.) at 1500-2000 revolutions per minute (RPM) for 20 seconds, hand mixed for 15-30 seconds, and then speed mixed at 1500-2000 RPM for 20 seconds again.

### EXAMPLE 1

Example 1 (EX-1) was prepared by mixing 132.86 g of EX-1 Part A (reported in Table 6) and 13.27 g of the EX-1 Part B (reported in Table 7) according to the Sealant Mixing method described hereinabove. A depth of cure of 0.130 inch (3.3 mm) for the resultant mixture was measured according to the Depth of Cure test method described previously. Tensile strength, elongation, and hardness measurements for the mixture were then determined according to the Tensile Strength and Elongation at Break test method and the Hardness Measurement test method described previously (see Table 8 for results). 1+1 dark cure refers to 1 day of curing at ambient temperature, followed by 1 day of curing in a 60°C oven. 2+4 dark cure refers to 2 days of curing at ambient temperature, followed by 4 days of curing in a 60°C oven.

**TABLE 6**

| PART A | |
|---|---|
| COMPONENT | AMOUNT, grams |
| AC-X92 | 185.38 |
| DABCO | 0.36 |
| A187 | 0.93 |
| AR202 | 3.63 |
| UPF | 64.88 |
| GLABUB | 9.82 |
| TnBB-MOPA | 0.91 |

**TABLE 7**

| PART B | |
|---|---|
| COMPONENT | AMOUNT, grams |
| DAEBPA | 17.98 |
| TAC | 2.82 |
| TBEC | 6.41 |
| OR819 | 2.44 |
| AR202 | 2.33 |

**TABLE 8**

| SAMPLE | TENSILE STRENGTH, psi (kPa) | ELONGATION AT BREAK, % | HARDNESS (SHORE A) |
|---|---|---|---|
| EX-1, light cure | 333 ± 5 (230 ± 34) | 228 ± 8 | 50 |
| EX-1, 1+1 dark cure | 324 ± 4 (223 ± 28) | 500 ± 11 | 41 |
| EX-1, 2+4 dark cure | 355 ± 13 (245 ± 90) | 459 ± 37 | 44 |

For the EX-1 application, life, hardness build, and tack-free time measurements, 132.00 g of the EX-1 Part A (reported in Table 6) and 13.19 g of the EX-1 Part B (reported in Table 7) were mixed together according to the Sealant Mixing test method described previously. Application life, hardness build measurements, and tack-free time for the mixture were then determined according to the relevant test methods described previously. Results are reported in Tables 9 and 10 (below).

**TABLE 9**

| TIME AFTER MIXING, minutes | EXTRUSION TIME, seconds | MASS EXTRUDED, grams | EXTRUSION RATE, grams/minute |
|---|---|---|---|
| 15 | 5 | 13.16 | 157.9 |
| 30 | 5 | 5.35 | 64.2 |
| 40 | 10 | 7.12 | 42.7 |
| 50 | 10 | 4.91 | 29.5 |
| 60 | 15 | 5.37 | 21.5 |
| 70 | 15 | 3.50 | 21.0 |
| 75 | 15 | 5.06 | 20.2 |
| 80 | 15 | 4.53 | 18.1 |
| 85 | 15 | 4.24 | 17.0 |
| 90 | 15 | 3.84 | 15.4 |
| 95 | 15 | 3.40 | 13.6 |

**TABLE 10**

| TIME AFTER MIXING, hours | DARK CURE SHORE A HARDNESS, top | DARK CURE SHORE A HARDNESS, bottom | TACK-FREE TEST |
|---|---|---|---|
| 18 | 15 | 15 | fail |
| 20 | 18 | 18 | fail |
| 27 | 20 | 20 | fail |
| 42 | 36 | 36 | pass |
| 51 | 39 | 39 | pass |
| 144 | 44 | 44 | pass |

### EXAMPLE 2

Example 2 (EX-2) was prepared by mixing 150.00 g of the EX-2 Part A (reported in Table 11) and 22.29 g of the EX-2 Part B (reported in Table 12) according to the Sealant Mixing test method described previously. Tensile strength, elongation, and hardness measurements for the mixture were then determined according to the Tensile Strength and Elongation at Break test method and the Hardness Measurement test method described previously (see Table 13 for results). 1+3 light cure refers to the designated light treatment (from the Tensile and Elongation Light Cure Conditions section) followed by 1 day of curing at ambient temperature and then 3 days of curing in a 60 °C oven. Application life, hardness build measurements, and tack-free time for the mixture were then determined according to the relevant test methods described previously. Results are reported in Tables 14 and 15.

**TABLE 11**

| COMPONENT | AMOUNT, grams |
|---|---|
| AC-X92 | 225.88 |
| DABCO | 0.44 |
| TnBB-MOPA | 1.07 |
| FUMSIL | 4.52 |
| S322 | 88.09 |

**TABLE 12**

| COMPONENT | AMOUNT, grams |
|---|---|
| DAEBPA | 21.05 |
| TAIC | 3.31 |
| TBEC | 7.50 |
| PENNCO | 0.03 |
| OR819 | 1.43 |
| FUMSIL | 2.61 |
| GLABUB | 19.07 |

**TABLE 13**

| SAMPLE | TENSILE STRENGTH, psi (KPa) | ELONGATION AT BREAK, % | SHORE A HARDNESS |
|---|---|---|---|
| EX-2, 1+3 light cure | 450 ± 16 (3100 ± 110) | 298 ± 33 | 60 |
| EX-2, 1+3 dark cure | 469 ± 7 (3230 ± 48) | 660 ± 4 | 48 |

**TABLE 14**

| TIME AFTER MIXING, minutes | EXTRUSION TIME, seconds | MASS EXTRUDED, grams | EXTRUSION RATE, grams/minute |
|---|---|---|---|
| 44 | 5 | 16.16 | 193.9 |
| 52 | 5 | 11.28 | 135.4 |
| 62 | 5 | 8.23 | 98.8 |
| 72 | 5 | 6.00 | 72.0 |
| 82 | 5 | 4.38 | 52.6 |
| 92 | 5 | 3.44 | 41.3 |
| 102 | 5 | 3.24 | 38.9 |
| 112 | 5 | 2.75 | 33.0 |
| 122 | 10 | 4.47 | 26.8 |
| 132 | 10 | 3.46 | 20.8 |
| 137 | 10 | 3.33 | 20.0 |
| 147 | 10 | 2.78 | 16.7 |
| 157 | 10 | 2.15 | 12.9 |

**TABLE 15**

| TIME AFTER MIXING, hours | DARK CURE SHORE A HARDNESS (top) | DARK CURE SHORE A HARDNESS (bottom) | TACK-FREE TEST |
|---|---|---|---|
| 18.5 | 25 | 25 | pass |
| 26.5 | 26 | 30 | pass |
| 42.5 | 34 | 34 | pass |
| 91 | 43 | 43 | pass |
| 264 | 48 | 50 | pass |
| 336 | 49 | 49 | pass |

### EXAMPLE 3

Example 3 (EX-3) was prepared by mixing 80.42 g of the EX-3 Part A (reported in Table 16) and 7.77 g of the EX-3 Part B (reported in Table 17) according to the Sealant Mixing test method described previously. A depth of cure of 0.13 inch (3.3 mm) for the resultant mixture was measured according to the Depth of Cure test method described previously. Approximately 5.0 grams of the material was placed in a DAC cup to measure an application life of 90 minutes by the method described in the test methods section. Hardness measurements, hardness build, and tack-free time for the mixture were determined according to the relevant test methods described previously (see Table 18 for results).

In the Tables that follow, "n/a" refers to measurements which could not be taken due to low viscosity and/or tackiness of the sample.

**TABLE 16**

| COMPONENT | AMOUNT, grams |
|---|---|
| AC-X92 | 56.25 |
| 3-QN | 0.12 |
| AR202 | 1.10 |
| UPF | 19.69 |
| GLABUB | 2.98 |
| TnBB-MOPA | 0.28 |

**TABLE 17**

| COMPONENT | AMOUNT, grams |
|---|---|
| DAEBP A | 4.32 |
| TAC | 0.89 |
| TBEC | 1.86 |
| OR819 | 0.36 |
| AR202 | 0.34 |

**TABLE 18**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 38 | n/a | n/a | n/a |
| 20 | 44 | 22 | 24 | pass |
| 28 | 46 | 28 | 28 | pass |
| 44 | 47 | 31 | 32 | pass |
| 52 | 47 | 33 | 34 | pass |
| 68 | 47 | 35 | 35 | pass |
| 75 | 47 | 36 | 36 | pass |
| 98 | 48 | 38 | 38 | pass |
| 126 | 49 | 39 | 39 | pass |
| 171 | 49 | 39 | 39 | pass |
| 293 | 49 | 40 | 41 | pass |
| 336 | 49 | 40 | 41 | pass |

### COMPARATIVE EXAMPLE AB

Comparative Example AB (CEX-AB) was prepared by mixing 80.14 g of the CEX-AB Part A (reported in Table 19) and 7.77 g of the CEX-AB Part B (reported in Table 20) according to the Sealant Mixing test method described previously. A depth of cure of 0.13 inch (3.3 mm) for the resultant mixture was measured according to the Depth of Cure test method described previously. Approximately 5.0 grams of the material was placed in a DAC cup to measure an application life of 120 minutes by the method described in the test methods section. Hardness measurements, hardness build, and tack-free time for the mixture were determined according to the relevant test methods described previously (see Table 21 for results).

**TABLE 19**

| COMPONENT | AMOUNT, grams |
|---|---|
| AC-X92 | 56.25 |
| 3-QN | 0.12 |
| AR202 | 1.10 |
| UPF | 19.69 |
| GLABUB | 2.98 |

**TABLE 20**

| COMPONENT | AMOUNT, GRAMS |
|---|---|
| DAEBP A | 4.32 |
| TAC | 0.89 |
| TBEC | 1.86 |
| OR819 | 0.36 |
| AR202 | 0.34 |

**TABLE 21**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 36 | n/a | n/a | n/a |
| 20 | 44 | n/a | 23 | fail |
| 28 | 46 | n/a | 24 | fail |
| 44 | 47 | n/a | 29 | fail |
| 52 | 47 | n/a | 29 | fail |
| 68 | 47 | 26 | 31 | fail |
| 75 | 47 | 32 | 32 | pass |
| 98 | 48 | 33 | 36 | pass |
| 126 | 49 | 34 | 38 | pass |
| 171 | 49 | 39 | 39 | pass |
| 293 | 49 | 39 | 41 | pass |
| 336 | 49 | 39 | 41 | pass |

### EXAMPLE 4

Example 4 (EX-4) was prepared by mixing 80.30 g of the EX-4 Part A (reported in Table 22) and 7.77 g of the EX-4 Part B (reported in Table 23) according to the Sealant Mixing test method described previously. A depth of cure of 0.14 inch (3.6 mm) for the resultant mixture was measured according to the Depth of Cure test method described previously. Approximately 5.0 grams of the material was placed in a DAC cup to measure an application life of 110 minutes by the method described in the test methods section. Hardness measurements, hardness build, and tack-free time for the mixture were determined according to the relevant test methods described previously (see Table 24 for results).

**TABLE 22**

| COMPONENT | AMOUNT, grams |
|---|---|
| AC-X92 | 56.25 |
| Ca(OH)₂ | 1.86 |
| AR202 | 1.10 |
| UPF | 17.83 |
| GLABUB | 2.98 |
| TnBB-MOPA | 0.28 |

**TABLE 23**

| COMPONENT | AMOUNT, grams |
|---|---|
| DAEBP A | 4.32 |
| TAC | 0.89 |
| TBEC | 1.86 |
| OR819 | 0.36 |
| AR202 | 0.34 |

**TABLE 24**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 35 | n/a | n/a | n/a |
| 22 | 42 | n/a | 23 | fail |
| 30 | 43 | n/a | 24 | pass |
| 46 | 47 | 30 | 30 | pass |
| 53 | 47 | 32 | 32 | pass |
| 76 | 50 | 36 | 36 | pass |
| 104 | 51 | 39 | 40 | pass |
| 149 | 51 | 39 | 40 | pass |
| 171 | 53 | 41 | 42 | pass |
| 271 | 53 | 42 | 43 | pass |
| 336 | 54 | 43 | 45 | pass |

### COMPARATIVE EXAMPLE AC

Comparative Example AC (CEX-AC) was prepared by mixing 80.02 g of the CEX-AC Part A (reported in Table 25) and 7.77 g of the CEX-AC Part B (reported in Table 26) according to the Sealant Mixing test method described previously. A depth of cure of 0.14 inch (3.6 mm) for the resultant mixture was measured according to the Depth of Cure test method described previously. Approximately 5.0 grams of the material was placed in a DAC cup to measure an application life of 180 minutes by the method described in the test methods section. Hardness measurements, hardness build, and tack-free time for the mixture were determined according to the relevant test methods described previously (see Table 27 for results).

**TABLE 25**

| COMPONENT | AMOUNT, grams |
|---|---|
| AC-X92 | 56.25 |
| Ca(OH)₂ | 1.86 |
| AR202 | 1.10 |
| UPF | 17.83 |
| GLABUB | 2.98 |

**TABLE 26**

| COMPONENT | AMOUNT, grams |
|---|---|
| DAEBP A | 4.32 |
| TAC | 0.89 |
| TBEC | 1.86 |
| OR819 | 0.36 |
| AR202 | 0.34 |

**TABLE 27**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 35 | n/a | n/a | n/a |
| 22 | 40 | n/a | 21 | fail |
| 30 | 41 | n/a | 23 | fail |
| 46 | 47 | n/a | 31 | fail |
| 53 | 47 | 33 | 33 | fail |
| 76 | 49 | 35 | 38 | pass |
| 104 | 51 | 37 | 41 | pass |
| 149 | 51 | 39 | 43 | pass |
| 171 | 51 | 41 | 43 | pass |
| 271 | 52 | 44 | 46 | pass |
| 336 | 53 | 44 | 46 | pass |

### EXAMPLE 5

Example 5 (EX-5) was prepared by mixing 80.30 g of the EX-5 Part A (reported in Table 28) and 7.77 g of the EX-5 Part B (reported in Table 29) according to the Sealant Mixing test method described previously. A depth of cure of 0.13 inch (3.3 mm) for the resultant mixture was measured according to the Depth of Cure test method described previously. Approximately 5.0 grams of the material was placed in a DAC cup to measure an application life of 150 minutes by the method described in the test methods section. Hardness measurements, hardness build, and tack-free time for the mixture were determined according to the relevant test methods described previously (see Table 30 for results).

**TABLE 28**

| COMPONENT | AMOUNT, grams |
|---|---|
| AC-X92 | 56.25 |
| AR202 | 1.10 |
| UPF | 19.69 |
| GLABUB | 2.98 |
| TnBB-MOPA | 0.28 |

**TABLE 29**

| COMPONENT | AMOUNT, grams |
|---|---|
| DAEBP A | 4.32 |
| TAC | 0.89 |
| TBEC | 1.86 |
| OR819 | 0.36 |
| AR202 | 0.34 |

**TABLE 30**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 34 | n/a | n/a | n/a |
| 20 | 38 | n/a | 19 | fail |
| 27 | 39 | n/a | 23 | fail |
| 43 | 42 | 22 | 26 | pass |
| 50 | 47 | 26 | 28 | pass |
| 73 | 47 | 33 | 35 | pass |
| 101 | 47 | 34 | 37 | pass |
| 146 | 51 | 39 | 40 | pass |
| 168 | 51 | 39 | 41 | pass |
| 268 | 51 | 41 | 42 | pass |
| 336 | 51 | 41 | 42 | pass |

### EXAMPLE 6

Example 6 (EX-6) was prepared by mixing 80.30 g of the EX-6 Part A (reported in Table 31) and 7.83 g of the EX-6 Part B (reported in Table 32) according to the Sealant Mixing test method described previously. A depth of cure of 0.13 inch (3.3 mm) for the resultant mixture was measured according to the Depth of Cure test method described previously. Approximately 5.0 grams of the material was placed in a DAC cup to measure an application life of 210 minutes by the method described in the test methods section. Hardness measurements, hardness build, and tack-free time for the mixture were determined according to the relevant test methods described previously (see Table 33 for results).

**TABLE 31**

| COMPONENT | AMOUNT, grams |
|---|---|
| AC-X92 | 56.25 |
| AR202 | 1.10 |
| UPF | 19.69 |
| GLABUB | 2.98 |
| TnBB-MOPA | 0.28 |

**TABLE 32**

| COMPONENT | AMOUNT, grams |
|---|---|
| DAEBP A | 4.32 |
| TAC | 0.89 |
| TBEC | 1.86 |
| OR819 | 0.36 |
| AR202 | 0.34 |
| AcOH | 0.06 |

**TABLE 33**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 37 | n/a | n/a | n/a |
| 24 | 45 | 22 | 24 | pass |
| 49 | 47 | 32 | 36 | pass |
| 74 | 54 | 36 | 36 | pass |
| 190 | 54 | 47 | 47 | pass |
| 336 | 55 | 50 | 51 | pass |

### EXAMPLE 7

Example 7 (EX-7) was prepared by mixing 80.41 g of the EX-7 Part A (reported in Table 34) and 6.13 g of the EX-7 Part B (reported in Table 35) according to the Sealant Mixing test method described previously. A depth of cure of 0.17 inch (4.3 mm) for the resultant mixture was measured according to the Depth of Cure test method described previously. Approximately 5.0 grams of the material was placed in a DAC cup to measure an application life of 40 minutes by the method described in the test methods section. Hardness measurements, hardness build, and tack-free time for the mixture were determined according to the relevant test methods described previously (see Table 36 for results).

**TABLE 34**

| COMPONENT | AMOUNT, grams |
|---|---|
| AC-X92 | 56.25 |
| DABCO | 0.11 |
| AR202 | 1.10 |
| UPF | 19.69 |
| GLABUB | 2.98 |
| TnBB-MOPA | 0.28 |

**TABLE 35**

| COMPONENT | AMOUNT, grams |
|---|---|
| DVE | 1.96 |
| TAC | 1.61 |
| TBEC | 1.86 |
| OR819 | 0.36 |
| AR202 | 0.34 |

**TABLE 36**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 47 | n/a | n/a | n/a |
| 17 | 52 | 32 | 35 | pass |
| 24 | 55 | 39 | 41 | pass |
| 47 | 55 | 46 | 47 | pass |
| 77 | 55 | 50 | 51 | pass |
| 120 | 56 | 50 | 51 | pass |
| 142 | 57 | 51 | 51 | pass |
| 164 | 58 | 51 | 52 | pass |
| 242 | 58 | 53 | 53 | pass |
| 336 | 60 | 53 | 54 | pass |

### EXAMPLE 8

Example 8 (EX-8) was prepared by mixing 80.30 g of the EX-8 Part A (reported in Table 37) and 6.13 g of the EX-8 Part B (reported in Table 38) according to the Sealant Mixing test method described previously. A depth of cure of 0.17 inch (4.3 mm) for the resultant mixture was measured according to the Depth of Cure test method described previously. Approximately 5.0 grams of the material was placed in a DAC cup to measure an application life of 40 minutes by the method described in the test methods section. Hardness measurements, hardness build, and tack-free time for the mixture were determined according to the relevant test methods described previously (see Table 39 for results).

**TABLE 37**

| COMPONENT | AMOUNT, grams |
|---|---|
| AC-X92 | 56.25 |
| Ca(OH)₂ | 1.86 |
| AR202 | 1.10 |
| UPF | 17.83 |
| GLABUB | 2.98 |
| TnBB-MOPA | 0.28 |

**TABLE 38**

| COMPONENT | AMOUNT, grams |
|---|---|
| DVE | 1.96 |
| TAC | 1.61 |
| TBEC | 1.86 |
| OR819 | 0.36 |
| AR202 | 0.34 |

**TABLE 39**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 48 | n/a | n/a | n/a |
| 17 | 52 | 30 | 33 | pass |
| 24 | 56 | 37 | 39 | pass |
| 47 | 57 | 47 | 47 | pass |
| 77 | 57 | 48 | 50 | pass |
| 120 | 57 | 48 | 50 | pass |
| 142 | 58 | 50 | 51 | pass |
| 164 | 59 | 51 | 52 | pass |
| 242 | 59 | 52 | 54 | pass |
| 336 | 60 | 54 | 55 | pass |

### EXAMPLE 9

Example 9 (EX-9) was prepared by mixing 80.41 g of the EX-9 Part A (reported in Table 40) and 8.44 g of the EX-9 Part B (reported in Table 41) according to the Sealant Mixing test method described previously. A depth of cure of 0.110 inch (2.79 mm) for the resultant mixture was measured according to the Depth of Cure test method described previously. Approximately 5.0 grams of the material was placed in a DAC cup to measure an application life of 260 minutes by the method described in the test methods section. Hardness measurements, hardness build, and tack-free time for the mixture were determined according to the relevant test methods described previously (see Table 42 for results).

**TABLE 40**

| COMPONENT | AMOUNT, grams |
|---|---|
| AC-X92 | 56.25 |
| DABCO | 0.11 |
| AR202 | 1.10 |
| UPF | 19.69 |
| GLABUB | 2.98 |
| TnBB-MOPA | 0.28 |

**TABLE 41**

| COMPONENT | AMOUNT, grams |
|---|---|
| DAEBP A | 4.32 |
| TAC | 0.89 |
| TBPIN | 2.53 |
| OR819 | 0.36 |
| AR202 | 0.34 |

**TABLE 42**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 28 | n/a | n/a | n/a |
| 24 | 33 | n/a | 19 | fail |
| 51 | 42 | 22 | 23 | pass |
| 96 | 43 | 27 | 31 | pass |
| 118 | 47 | 34 | 37 | pass |
| 140 | 48 | 36 | 39 | pass |
| 168 | 50 | 38 | 42 | pass |
| 193 | 52 | 40 | 43 | pass |
| 218 | 54 | 42 | 43 | pass |
| 336 | 55 | 46 | 48 | pass |

### EXAMPLE 10

Example 10 (EX-10) was prepared by mixing 80.49 g of the EX-10 Part A (reported in Table 43) and 8.44 g of the EX-10 Part B (reported in Table 44) according to the Sealant Mixing test method described previously. A depth of cure of 0.11 inch (2.8 mm) for the resultant mixture was measured according to the Depth of Cure test method described previously. Approximately 5.0 grams of the material was placed in a DAC cup to measure an application life of 240 minutes by the method described in the test methods section. Hardness measurements, hardness build, and tack-free time for the mixture were determined according to the relevant test methods described previously (see Table 45 for results).

**TABLE 43**

| COMPONENT | AMOUNT, grams |
|---|---|
| AC-X92 | 56.25 |
| DMI | 0.19 |
| AR202 | 1.10 |
| UPF | 19.69 |
| GLABUB | 2.98 |
| TnBB-MOPA | 0.28 |

**TABLE 44**

| COMPONENT | AMOUNT, grams |
|---|---|
| DAEBP A | 4.32 |
| TAC | 0.89 |
| TBPIN | 2.53 |
| OR819 | 0.36 |
| AR202 | 0.34 |

**TABLE 45**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 28 | n/a | n/a | n/a |
| 24 | 35 | n/a | 22 | fail |
| 51 | 46 | 27 | 28 | pass |
| 96 | 47 | 33 | 36 | pass |
| 118 | 49 | 39 | 40 | pass |
| 140 | 51 | 41 | 43 | pass |
| 168 | 53 | 41 | 43 | pass |
| 193 | 53 | 43 | 46 | pass |
| 218 | 53 | 44 | 46 | pass |
| 336 | 54 | 46 | 48 | pass |

### EXAMPLE 11

Example 11 (EX-11) was prepared by mixing 80.41 g of the EX-11 Part A (reported in Table 46) and 5.02 g of the EX-11 Part B (reported in Table 47) according to the Sealant Mixing test method described previously. A depth of cure of 0.17 inch (4.3 mm) for the resultant mixture was measured according to the Depth of Cure test method described previously. Approximately 5.0 grams of the material was placed in a DAC cup to measure an application life of 15 minutes by the method described in the test methods section. Hardness measurements, hardness build, and tack-free time for the mixture were determined according to the relevant test methods described previously (see Table 48 for results).

**TABLE 46**

| COMPONENT | AMOUNT, grams |
|---|---|
| AC-X92 | 56.25 |
| DABCO | 0.11 |
| AR202 | 1.10 |
| UPF | 19.69 |
| GLABUB | 2.98 |
| TnBB-MOPA | 0.28 |

**TABLE 47**

| COMPONENT | AMOUNT, grams |
|---|---|
| DVE | 1.96 |
| TAC | 1.61 |
| CHP | 0.76 |
| OR819 | 0.36 |
| AR202 | 0.34 |

**TABLE 48**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 47 | n/a | n/a | n/a |
| 29 | 53 | 24 | 26 | pass |
| 50 | 53 | 24 | 27 | pass |
| 78 | 53 | 26 | 28 | pass |
| 103 | 53 | 28 | 31 | pass |
| 128 | 56 | 29 | 31 | pass |
| 224 | 56 | 33 | 35 | pass |
| 336 | 56 | 36 | 38 | pass |

### EXAMPLE 12

Example 12 (EX-12) was prepared by mixing 80.30 g of the EX-12 Part A (reported in Table 49) and 5.02 g of the EX-12 Part B (reported in Table 50) according to the Sealant Mixing test method described previously. A depth of cure of 0.15 inch (3.8 mm) for the resultant mixture was measured according to the Depth of Cure test method described previously. Approximately 5.0 grams of the material was placed in a DAC cup to measure an application life of 20 minutes by the method described in the test methods section. Hardness measurements, hardness build, and tack-free time for the mixture were determined according to the relevant test methods described previously (see Table 51 for results).

**TABLE 49**

| COMPONENT | AMOUNT, grams |
|---|---|
| AC-X92 | 56.25 |
| AR202 | 1.10 |
| UPF | 19.69 |
| GLABUB | 2.98 |
| TnBB-MOPA | 0.28 |

**TABLE 50**

| COMPONENT | AMOUNT, grams |
|---|---|
| DVE | 1.96 |
| TAC | 1.61 |
| CHP | 0.76 |
| OR819 | 0.36 |
| AR202 | 0.34 |

**TABLE 51**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 45 | n/a | n/a | n/a |
| 29 | 56 | 22 | 26 | pass |
| 50 | 56 | 26 | 28 | pass |
| 78 | 56 | 28 | 31 | pass |
| 103 | 56 | 29 | 32 | pass |
| 128 | 56 | 30 | 32 | pass |
| 224 | 56 | 32 | 34 | pass |
| 336 | 56 | 38 | 38 | pass |

### EXAMPLE 13

Example 13 (EX-13) was prepared by mixing 80.15 g of the EX-13 Part A (reported in Table 52) and 7.77 g of the EX-13 Part B (reported in Table 53) according to the Sealant Mixing test method described previously. A depth of cure of 0.12 inch (3.0 mm) for the resultant mixture was measured according to the Depth of Cure test method described previously. Approximately 5.0 grams of the material was placed in a DAC cup to measure an application life of 70 minutes by the method described in the test methods section. Hardness measurements, hardness build, and tack-free time for the mixture were determined according to the relevant test methods described previously (see Table 54 for results).

**TABLE 52**

| COMPONENT | AMOUNT, grams |
|---|---|
| AC-X92 | 56.25 |
| AR202 | 1.10 |
| UPF | 19.69 |
| GLABUB | 2.98 |
| TEB-DAP | 0.13 |

**TABLE 53**

| COMPONENT | AMOUNT, grams |
|---|---|
| DAEBP A | 4.32 |
| TAC | 0.89 |
| TBEC | 1.86 |
| OR819 | 0.36 |
| AR202 | 0.34 |

**TABLE 54**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 41 | n/a | n/a | n/a |
| 23 | 47 | n/a | n/a | pass |
| 47 | 52 | 20 | 22 | pass |
| 73 | 53 | 29 | 32 | pass |
| 98 | 55 | 35 | 36 | pass |
| 123 | 55 | 37 | 38 | pass |
| 239 | 55 | 47 | 47 | pass |
| 336 | 57 | 52 | 52 | pass |

### EXAMPLE 14

Example 14 (EX-14) was prepared by mixing 80.15 g of the EX-14 Part A (reported in Table 55) and 8.44 g of the EX-14 Part B (reported in Table 56) according to the Sealant Mixing test method described previously. A depth of cure of 0.14 inch (3.6 mm) for the resultant mixture was measured according to the Depth of Cure test method described previously. Approximately 5.0 grams of the material was placed in a DAC cup to measure an application life of 90 minutes by the method described in the test methods section. Hardness measurements, hardness build, and tack-free time for the mixture were determined according to the relevant test methods described previously (see Table 57 for results).

**TABLE 55**

| COMPONENT | AMOUNT, grams |
|---|---|
| AC-X92 | 56.25 |
| AR202 | 1.10 |
| UPF | 19.69 |
| GLABUB | 2.98 |
| TEB-DAP | 0.13 |

**TABLE 56**

| COMPONENT | AMOUNT, grams |
|---|---|
| DAEBP A | 4.32 |
| TAC | 0.89 |
| TBPIN | 2.53 |
| OR819 | 0.36 |
| AR202 | 0.34 |

**TABLE 57**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 40 | n/a | n/a | n/a |
| 23 | 45 | n/a | n/a | pass |
| 47 | 48 | n/a | n/a | pass |
| 73 | 50 | 26 | 31 | pass |
| 98 | 52 | 31 | 34 | pass |
| 123 | 54 | 36 | 36 | pass |
| 239 | 54 | 47 | 47 | pass |
| 336 | 55 | 50 | 51 | pass |

### EXAMPLE 15

Example 15 (EX-15) was prepared by mixing 85.00 grams of the EX-15 Part A (reported in Table 58) and 12.50 grams of the EX-15 Part B (reported in Table 59) according to the Sealant Mixing test method described previously. Hardness and tack-free measurements for the mixture were then determined according to the protocols in the Test Methods section, with the results in Table 60 below.

**TABLE 58**

| COMPONENT | AMOUNT, grams |
|---|---|
| AC-X92 | 84.60 |
| DABCO | 0.06 |
| TnBB-MOPA | 0.66 |
| FUMSIL | 1.69 |
| S322 | 33.00 |

**TABLE 59**

| COMPONENT | AMOUNT, grams |
|---|---|
| DAEBPA | 38.01 |
| TAIC | 5.97 |
| TBEC | 13.55 |
| PENNCO | 0.05 |
| OR819 | 2.62 |
| FUMSIL | 4.80 |
| GLABUB | 35.00 |

**TABLE 60**

| TIME AFTER MIXING, hours | DARK CURE SHORE A HARDNESS (TOP) | DARK CURE SHORE A HARDNESS (BOTTOM) | TACK-FREE TEST |
|---|---|---|---|
| 21 | 21 | 21 | pass |
| 29 | 27 | 27 | pass |
| 49 | 33 | 33 | pass |
| 93 | 39 | 40 | pass |
| 122 | 43 | 43 | pass |
| 141 | 44 | 44 | pass |
| 165 | 39 | 41 | pass |
| 189 | 42 | 42 | pass |
| 216 | 46 | 46 | pass |
| 262 | 47 | 48 | pass |
| 285 | 47 | 47 | pass |
| 309 | 48 | 48 | pass |
| 333 | 49 | 49 | pass |

### EXAMPLE 16

Example 16 (EX-16) was prepared by mixing 127.93 grams of the EX-16 Part A (reported in Table 61) and 18.87 grams of the EX-16 Part B (reported in Table 62) according to the Sealant Mixing test method described previously. Hardness and tack-free measurements for the mixture were then determined according to the protocols in the Test Methods section, with the results in Table 63 below.

**TABLE 61**

| COMPONENT | AMOUNT, grams |
|---|---|
| AC-X92 | 113.09 |
| DABCO | 0.37 |
| TnBB-MOPA | 0.18 |
| FUMSIL | 2.26 |
| S322 | 44.11 |

**TABLE 62**

| COMPONENT | AMOUNT, grams |
|---|---|
| DAEBPA | 38.01 |
| TAIC | 5.97 |
| TBEC | 13.55 |
| PENNCO | 0.05 |
| OR819 | 2.62 |
| FUMSIL | 4.80 |
| GLABUB | 35.00 |

**TABLE 63**

| TIME AFTER MIXING, hours | DARK CURE SHORE A HARDNESS (TOP) | DARK CURE SHORE A HARDNESS (BOTTOM) | TACK-FREE TEST |
|---|---|---|---|
| 17.5 | 22 | 25 | fail |
| 24 | 25 | 28 | fail |
| 41.5 | 34 | 36 | pass |
| 50 | 37 | 40 | pass |
| 70 | 42 | 44 | pass |
| 114 | 46 | 47 | pass |
| 143 | 49 | 50 | pass |
| 162 | 49 | 50 | pass |
| 186.3 | 46 | 50 | pass |
| 210.5 | 49 | 49 | pass |
| 238 | 52 | 52 | pass |
| 283 | 52 | 52 | pass |
| 306 | 52 | 52 | pass |
| 330 | 52 | 52 | pass |

### EXAMPLE 17

Example 17 (EX-17) was prepared by mixing 140.00 grams of the EX-17 Part A (reported in Table 64) and 23.97 grams of the EX-17 Part B (reported in Table 65) according to the Sealant Mixing test method described previously. A depth of cure of 0.110 inch (2.8 mm) for the resultant mixture was measured according to the method described in the Test Methods section. Tensile strength, elongation, hardness, and tack-free measurements for the mixture were then determined according to the protocols in the Test Methods section, with the results in Table 66 and Table 67 below. Both the light and dark-cured tensile and elongation samples were allowed to sit at room temperature for 11 days in a dark cabinet. 140.00 grams of the EX-17 Part A (reported in Table 64) and 23.97 grams of the EX-17 Part B (reported in Table 65) were mixed together according to the mixing protocol described in the Test Methods section. Application life for the mixture was then determined according to the protocols in the Test Methods section, and the results reported in Table 68.

**TABLE 64**

| COMPONENT | AMOUNT, grams |
|---|---|
| AC-X92 | 248.97 |
| DABCO | 0.39 |
| TnBB-MOPA | 0.93 |
| FUMSIL | 4.98 |
| S322 | 54.77 |
| GLABUB2 | 9.96 |

**TABLE 65**

| COMPONENT | AMOUNT, grams |
|---|---|
| DAEBPA | 17.49 |
| TAIC | 2.21 |
| TBEC | 9.75 |
| PENNCO | 0.03 |
| OR819 | 1.21 |
| A187 | 8.58 |
| K1003 | 0.86 |
| FUMSIL | 2.86 |
| GLABUB2 | 20.02 |

**TABLE 66**

| SAMPLE | TENSILE STRENGTH, PSI (MPa) | ELONGATION AT BREAK, % | HARDNESS SHORE A |
|---|---|---|---|
| EX-17, light cure + 11 days at RT | 431 ± 43 (20.6 ± 2.1) | 136 ± 22 | 67 |
| EX-17, dark cure 11 days at RT | 388 ± 21 (18.6 ± 1.0) | 167 ± 15 | 62 |

**TABLE 67**

| TIME AFTER MIXING, hours | DARK CURE SHORE A HARDNESS (TOP) | DARK CURE SHORE A HARDNESS (BOTTOM) | TACK-FREE TEST |
|---|---|---|---|
| 19 | 19 | 21 | fail |
| 26.5 | 26 | 31 | fail |
| 99 | 49 | 49 | pass |
| 263 | 60 | 61 | pass |
| 336 | 62 | 62 | pass |

**TABLE 68**

| TIME AFTER MIXING, minutes | EXTRUSION TIME, seconds | AMOUNT EXTRUDED, grams | EXTRUSION RATE, grams/minute |
|---|---|---|---|
| 37 | 5 | 11.62 | 139.4 |
| 47 | 5 | 7.07 | 84.8 |
| 57 | 5 | 4.8 | 57.6 |
| 67 | 10 | 7.74 | 46.4 |
| 77 | 10 | 5.4 | 32.4 |
| 87 | 10 | 4.13 | 24.8 |
| 97 | 15 | 5.61 | 22.4 |
| 107 | 15 | 4.48 | 17.9 |
| 117 | 15 | 3.64 | 14.6 |
| 124 | 15 | 3.18 | 12.7 |

### EXAMPLE 18

Example 18 (EX-18) was prepared by mixing 100.00 grams of the EX-18 Part A (reported in Table 69) and 13.42 grams of the EX-18 Part B (reported in Table 70) according to the Sealant Mixing test method described previously. A depth of cure of 0.129 inch (3.28 mm) for the resultant mixture was measured according to the method described in the Test Methods section. Tensile strength, elongation, hardness, and tack-free measurements for the mixture were then determined according to the protocols in the Test Methods section, with the results in Table 71 and Table 72 below. Both the light and dark-cured tensile and elongation samples were allowed to sit at RT for 14 days in a dark cabinet.

**TABLE 69**

| COMPONENT | AMOUNT, grams |
|---|---|
| AC-X92 | 70.59 |
| DABCO | 0.14 |
| TnBB-MOPA | 0.33 |
| FUMSIL | 1.41 |
| S322 | 27.53 |

**TABLE 70**

| COMPONENT | AMOUNT, grams |
|---|---|
| DAEBP A | 5.50 |
| TAIC | 0.86 |
| TBEC | 2.45 |
| PENNCO | 0.01 |
| OR819 | 0.47 |
| FUMSIL | 0.87 |
| GLABUB2 | 6.34 |

**TABLE 71**

| SAMPLE | TENSILE STRENGTH, PSI (MPa) | ELONGATION AT BREAK, % | HARDNESS SHORE A |
|---|---|---|---|
| EX-18, light cure + 14d RT | 305 ± 8 (14.6 ± 0.4) | 259 ± 13 | 56 |
| EX-18, dark cure 14d RT | 302 ± 32 (14.5 ±1.5) | 378 ± 53 | 50 |

**TABLE 72**

| TIME AFTER MIXING, hours | DARK CURE SHORE A HARDNESS (TOP) | DARK CURE SHORE A HARDNESS (BOTTOM) | TACK-FREE TEST |
|---|---|---|---|
| 18.5 | 20 | 22 | fail |
| 23.5 | 22 | 23 | pass |
| 42 | 29 | 29 | pass |
| 90 | 36 | 38 | pass |
| 162 | 46 | 46 | pass |
| 185 | 47 | 47 | pass |
| 210 | 51 | 52 | pass |
| 234 | 50 | 53 | pass |
| 402.5 | 54 | 55 | pass |

### EXAMPLE 19

Example 19 (EX-19) was prepared by mixing 100.00 grams of the EX-19 Part A (reported in Table 73) and 16.03 grams of the EX-19 Part B (reported in Table 74) according to the Sealant Mixing test method described previously. A depth of cure of 0.121 inch (3.07 mm) for the resultant mixture was measured according to the method described in the Test Methods section. Tensile strength, elongation, hardness, and tack-free measurements for the mixture were then determined according to the protocols in the Test Methods section, with the results in Table 75 and Table 76 below. Both the light and dark-cured tensile and elongation samples were allowed to sit at RT for 14 days in a dark cabinet.

**TABLE 73**

| COMPONENT | AMOUNT, grams |
|---|---|
| AC-X92 | 70.59 |
| DABCO | 0.14 |
| TnBB-MOPA | 0.33 |
| FUMSIL | 1.41 |
| S322 | 27.53 |

**TABLE 74**

| COMPONENT | AMOUNT, grams |
|---|---|
| DAEBP A | 8.26 |
| TAIC | 1.30 |
| TBEC | 2.45 |
| PENNCO | 0.01 |
| OR819 | 0.48 |
| FUMSIL | 0.87 |
| GLABUB2 | 6.34 |

**TABLE 75**

| SAMPLE | TENSILE STRENGTH, PSI (MPa) | ELONGATION AT BREAK, % | HARDNESS SHORE A |
|---|---|---|---|
| EX-19, light cure + 14d RT^{∗} | 449 ± 2 (21.5 ± 0.1) | 1022 ± 4 | 39 |
| EX-19, dark cure 14d RT | 624 ± 36 (29.9 ± 1.7) | 1112± 16 | 33 |
| ^{∗}Values averaged between two specimens | | | |

**TABLE 76**

| TIME AFTER MIXING, hours | DARK CURE SHORE A HARDNESS (TOP) | DARK CURE SHORE A HARDNESS (BOTTOM) | TACK-FREE TEST |
|---|---|---|---|
| 16.5 | 16 | 15 | fail |
| 21.5 | 17 | 17 | fail |
| 40 | 22 | 23 | pass |
| 88 | 28 | 30 | pass |
| 160 | 31 | 31 | pass |
| 183 | 31 | 31 | pass |
| 232 | 30 | 33 | pass |
| 400.5 | 33 | 33 | pass |

### EXAMPLE 20

Example 20 (EX-20) was prepared by mixing 65.00 grams of the EX-20 Part A (reported in Table 77) and 11.38 grams of the EX-20 Part B (reported in Table 78) according to the Sealant Mixing test method described previously. A depth of cure of 0.133 inch (3.38 mm) for the resultant mixture was measured according to the method described in the Test Methods section. Tensile strength, elongation, and hardness measurements for the mixture were then determined according to the protocols in the Test Methods section, with the results in Table 79 below. Both the light and dark-cured tensile and elongation samples were allowed to sit at RT for 14 days in a dark cabinet.

**TABLE 77**

| COMPONENT | AMOUNT, grams |
|---|---|
| AC-X92 | 50.18 |
| DABCO | 0.08 |
| TnBB-MOPA | 0.19 |
| FUMSIL | 0.75 |
| S322 | 11.04 |
| GLABUB2 | 2.76 |

**TABLE 78**

| COMPONENT | AMOUNT, grams |
|---|---|
| DAEBP A | 5.77 |
| TBEC | 2.25 |
| PENNCO | 0.01 |
| OR819 | 0.38 |
| A187 | 1.98 |
| FUMSIL | 0.99 |
| GLABUB2 | 3.64 |

**TABLE 79**

| SAMPLE | TENSILE STRENGTH, PSI (MPa) | ELONGATION AT BREAK, % | HARDNESS SHORE A |
|---|---|---|---|
| EX-20, light cure + 14d RT | 483 ± 11 (23.1 ± 0.5) | 251 ± 7 | 61 |
| EX-20, dark cure 14d RT^{∗} | 427 ± 2 (20.4 ± 0.1) | 452 ± 2 | 53 |
| ^{∗}Values averaged between two specimens | | | |

### EXAMPLE 21

Example 21 (EX-21) was prepared by mixing 80.00 grams of the EX-21 Part A (reported in Table 80) and 11.76 grams of the EX-21 Part B (reported in Table 81) according to the Sealant Mixing test method described previously. A depth of cure of 0.142 inch (3.61 mm) for the resultant mixture was measured according to the method described in the Test Methods section. Tensile strength, elongation, hardness, and tack-free measurements for the mixture were then determined according to the protocols in the Test Methods section, with the results in Table 82 and Table 83 below. Both the light and dark-cured tensile and elongation samples were allowed to sit at RT for 14 days in a dark cabinet.

**TABLE 80**

| COMPONENT | AMOUNT, grams |
|---|---|
| AC-X92 | 56.67 |
| DABCO | 0.11 |
| TnBB-MOPA | 0.26 |
| FUMSIL | 0.85 |
| S322 | 22.10 |

**TABLE 81**

| COMPONENT | AMOUNT, grams |
|---|---|
| DAEBPA | 4.78 |
| TAIC | 1.42 |
| TBEC | 2.04 |
| PENNCO | 0.01 |
| OR819 | 0.39 |
| FUMSIL | 1.08 |
| GLABUB2 | 5.27 |

**TABLE 82**

| SAMPLE | TENSILE STRENGTH, PSI (MPa) | ELONGATION AT BREAK, % | HARDNESS SHORE A |
|---|---|---|---|
| EX-21, light cure + 14d RT | 306 ± 19 (14.7 ± 0.9) | 238 ± 25 | 58 |
| EX-21, dark cure 14d RT | 300 ± 14 (14.4 ± 0.7) | 384 ± 23 | 53 |

**TABLE 83**

| TIME AFTER MIXING, hours | DARK CURE SHORE A HARDNESS (TOP) | DARK CURE SHORE A HARDNESS (BOTTOM) | TACK-FREE TEST |
|---|---|---|---|
| 16.5 | 25 | 26 | fail |
| 23.5 | 33 | 33 | pass |
| 88.5 | 46 | 47 | pass |
| 111.5 | 48 | 48 | pass |
| 136 | 53 | 53 | pass |
| 160 | 52 | 52 | pass |
| 328.5 | 55 | 55 | pass |

### EXAMPLE 22

Example 22 (EX-22) was prepared by mixing 60.59 grams of the EX-22 Part A (reported in Table 84) and 28.79 grams of the EX-22 Part B (reported in Table 85) according to the Sealant Mixing test method described previously. A depth of cure of 0.18 inch (4.6 mm) for the resultant mixture was measured according to the method described in the Test Methods section. Approximately 5.0 grams of the material was placed in a DAC cup to measure an application life of 15 minutes by the method described in the test methods section. Hardness measurements, hardness build, and tack-free time for the mixture were determined according to the relevant test methods described previously (see Table 86 for results).

**TABLE 84**

| COMPONENT | AMOUNT, grams |
|---|---|
| TMPTMP | 25.03 |
| UPF | 31.20 |
| AR202 | 1.10 |
| GLABUB | 2.98 |
| TnBB-MOPA | 0.28 |

**TABLE 85**

| COMPONENT | AMOUNT, grams |
|---|---|
| DAEBPA | 21.06 |
| TAC | 4.31 |
| OR819 | 2.14 |
| TBEC | 0.94 |
| AR202 | 0.34 |

**TABLE 86**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 49 | n/a | n/a | n/a |
| 19 | 52 | 41 | 43 | pass |
| 49 | 53 | 46 | 48 | pass |
| 68 | 53 | 47 | 48 | pass |

### EXAMPLE 23

Example 23 (EX-23) was prepared by mixing 81.25 grams of the EX-23 Part A (reported in Table 87) and 6.22 grams of the EX-23 Part B (reported in Table 88) according to the Sealant Mixing test method described previously. A depth of cure of 0.10 inch (2.5 mm) for the resultant mixture was measured according to the method described in the Test Methods section. Approximately 5.0 grams of the material was placed in a DAC cup to measure an application life of 60 minutes by the method described in the test methods section. Hardness measurements, hardness build, and tack-free time for the mixture were determined according to the relevant test methods described previously (see Table 89 for results).

**TABLE 87**

| COMPONENT | AMOUNT, grams |
|---|---|
| AC-X92 | 56.25 |
| DABCO | 0.95 |
| AR202 | 1.10 |
| UPF | 19.69 |
| GLABUB | 2.98 |
| TnBB-MOPA | 0.28 |

**TABLE 88**

| COMPONENT | AMOUNT, grams |
|---|---|
| HPD | 1.78 |
| CHP | 3.74 |
| OR819 | 0.36 |
| AR202 | 0.34 |

**TABLE 89**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | 19 | n/a | n/a | n/a |
| 21 | 35 | 31 | 34 | pass |
| 51 | 36 | 33 | 34 | pass |
| 70 | 36 | 33 | 34 | pass |

### EXAMPLE 24

Example 24 (EX-24) was prepared by mixing 81.25 grams of the EX-24 Part A (reported in Table 90) and 7.33 grams of the EX-24 Part B (reported in Table 91) according to the Sealant Mixing test method described previously. A depth of cure of 0.04 inch (1.0 mm) for the resultant mixture was measured according to the method described in the Test Methods section. Approximately 5.0 grams of the material was placed in a DAC cup to measure an application life of 200 minutes by the method described in the test methods section. Hardness measurements, hardness build, and tack-free time for the mixture were determined according to the relevant test methods described previously (see Table 92 for results).

**TABLE 90**

| COMPONENT | AMOUNT, grams |
|---|---|
| AC-X92 | 56.25 |
| DABCO | 0.95 |
| AR202 | 1.10 |
| UPF | 19.69 |
| GLABUB | 2.98 |
| TnBB-MOPA | 0.28 |

**TABLE 91**

| COMPONENT | AMOUNT, grams |
|---|---|
| DCP | 1.28 |
| TAIC | 1.61 |
| CHP | 3.74 |
| OR819 | 0.36 |
| AR202 | 0.34 |

**TABLE 92**

| TIME AFTER MIXING, hours | LIGHT CURE SHORE A HARDNESS | DARK CURE SHORE A HARDNESS (TOP) | DARK CURE SHORE A HARDNESS (BOTTOM) | TACK-FREE TEST |
|---|---|---|---|---|
| 0 | n/a | n/a | n/a | n/a |
| 20 | 19 | n/a | 19 | fail |
| 50 | 22 | n/a | 19 | fail |
| 69 | 22 | 18 | 19 | fail |

### COMPARATIVE EXAMPLE AD

Comparative Example AD (CEX-AD) was prepared by mixing 62.72 grams of the CEX-AD Part A (reported in Table 93) and 7.42 grams of the CEX-AD Part B (reported in Table 94) according to the Sealant Mixing test method described previously. A depth of cure of 0.110 inch (2.79 mm) for the resultant mixture was measured according to the method described in the Test Methods section. Hardness and tack-free measurements for the mixture were then determined according to the protocols in the Test Methods section, with the results in Table 95 below. 140.00 grams of the CEX-AD Part A (reported in Table 93) and 16.57 grams of the CEX-AD Part B (reported in Table 94) were mixed together according to the mixing protocol described in the Test Methods section. Hardness measurements, hardness build, and tack-free time for the mixture were determined according to the relevant test methods described previously (see Table 95 for results). Application life for the mixture was then determined according to the protocols in the Test Methods section, and results are reported in Table 96.

**TABLE 93**

| COMPONENT | AMOUNT, grams |
|---|---|
| AC-X92 | 215.24 |
| DABCO | 1.82 |
| A187 | 1.10 |
| AR202 | 4.35 |
| UPF | 75.33 |
| D-E135 | 2.15 |

**TABLE 94**

| COMPONENT | AMOUNT, grams |
|---|---|
| DAEBPA | 25.55 |
| TAC | 4.01 |
| TBEC | 13.10 |
| PrBlue | 0.11 |
| OR819 | 3.82 |
| AR202 | 3.42 |

**TABLE 95**

| TIME AFTER MIXING, hours | SHORE A HARDNESS (TOP) | SHORE A HARDNESS (BOTTOM) | TACK-FREE TEST |
|---|---|---|---|
| 15 | 20 | 25 | fail |
| 19 | 23 | 28 | fail |
| 24 | 23 | 30 | fail |
| 28 | 25 | 33 | fail |
| 33 | 27 | 35 | fail |
| 39 | 32 | 36 | fail |
| 44 | 32 | 39 | fail |
| 48 | 32 | 39 | fail |
| 53 | 34 | 40 | pass |

**TABLE 96**

| TIME AFTER MIXING, minutes | EXTRUSION TIME, seconds | AMOUNT EXTRUDED, grams | EXTRUSION RATE, grams/minute |
|---|---|---|---|
| 18 | 10 | 18.03 | 108 |
| 32 | 10 | 6.9 | 41 |
| 43 | 15 | 5.86 | 23 |
| 50 | 30 | 7.95 | 16 |
| 53 | 30 | 7.5 | 15 |
| 58 | 60 | 11.2 | 11 |
| 62 | 60 | 9.42 | 9 |

## Claims

1. A curable sealant composition comprising components:
a) x weight percent of at least one polythiol;
b) y weight percent of at least one unsaturated compound having at least two non-aromatic carbon-carbon double bonds, at least one carbon-carbon triple bond, or a combination thereof;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

2. The curable sealant composition of claim 1, wherein the curable sealant composition comprises:
a) from 70 to 98 weight percent of the at least one polythiol;
b) from 2 to 20 weight percent of the at least one unsaturated compound;
c) from 0.01 to 8 weight percent of the at least one organoborane-amine complex;
d) from 0.05 to 10 weight percent of the at least one organic peroxide; and
e) from 0.01 to 10 weight percent of the photoinitiator system capable of generating free radicals upon exposure to actinic radiation.

3. The curable sealant composition of claim 1, wherein the curable sealant composition comprises:
a) from 80 to 95 weight percent of the at least one polythiol;
b) from 3 to 10 weight percent of the at least one unsaturated compound;
c) from 0.25 to 3 weight percent of the at least one organoborane-amine complex;
d) from 0.75 to 5 weight percent of the at least one organic peroxide; and
e) from 0.1 to 1.5 weight percent of the photoinitiator system capable of generating free radicals upon exposure to actinic radiation.

4. The curable sealant composition of claim 1, wherein the at least one polythiol comprises an aliphatic polythiol.

5. The curable sealant composition of claim 1, wherein the photoinitiator system comprises an acylphosphine oxide.

6. A two-part curable sealant composition comprising a Part A composition and a Part B composition, wherein:
the Part A composition comprises at least one polythiol; and
the Part B composition comprises at least one unsaturated compound having at least two non-aromatic carbon-carbon double bonds, at least one carbon-carbon triple bond, or a combination thereof, wherein the Part A composition and the Part B composition collectively comprise components:
a) x weight percent of the at least one polythiol;
b) y weight percent of the at least one unsaturated compound;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

7. The two-part curable sealant composition of claim 6, wherein the components comprise:
a) from 70 to 98 weight percent of the at least one polythiol;
b) from 2 to 20 weight percent of the at least one unsaturated compound;
c) from 0.01 to 8 weight percent of the at least one organoborane-amine complex;
d) from 0.05 to 10 weight percent of the at least one organic peroxide; and
e) from 0.01 to 10 weight percent of the photoinitiator system capable of generating free radicals upon exposure to actinic radiation.

8. The two-part curable sealant composition of claim 6, wherein the components comprise:
a) from 80 to 95 weight percent of the at least one polythiol;
b) from 3 to 10 weight percent of the at least one unsaturated compound;
c) from 0.25 to 3 weight percent of the at least one organoborane-amine complex;
d) from 0.75 to 5 weight percent of the at least one organic peroxide; and
e) from 0.1 to 1.5 weight percent of the photoinitiator system capable of generating free radicals upon exposure to actinic radiation.

9. The two-part curable sealant composition of claim 6, wherein the at least one polythiol comprises an aliphatic polythiol.

10. A method of making a curable sealant composition, the method comprising:
providing a two-part curable sealant composition comprising a Part A composition and a Part B, wherein:
the Part A composition comprises at least one polythiol; and
the Part B composition comprises at least one unsaturated compound having at least two non-aromatic carbon-carbon double bonds, at least one carbon-carbon triple bond, or a combination thereof, wherein the Part A composition and the Part B composition collectively comprise components:
a) x weight percent of the at least one polythiol;
b) y weight percent of at least one unsaturated compound;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e); and
combining at least a portion of the Part A composition with at least a portion of the Part B composition to provide a curable sealant composition.

11. A method of sealing a substrate, the method comprising:
i) applying a curable sealant composition to a surface of the substrate, wherein the curable sealant composition comprises components:
a) x weight percent of the at least one polythiol;
b) y weight percent of at least one unsaturated compound having at least two non-aromatic carbon-carbon double bonds, at least one carbon-carbon triple bond, or a combination thereof;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e);
ii) exposing at least a portion of the at least one photoinitiator to actinic electromagnetic radiation; and
iii) curing the curable sealant composition throughout its bulk.

12. The method of claim 11, wherein the substrate comprises an aircraft component.

13. The method of claim 12, wherein the curable sealant composition is applied to a seam or joint between portions of aircraft skin.

14. The method of claim 13, wherein the curable sealant composition is applied to at least one of an aircraft fastener, an aircraft window, an aircraft access panel, a fuselage protrusion, or an aircraft fuel tank.

15. A seal cap comprising:
a cap which defines an interior that is open at one end; and
curable sealant composition disposed within the interior of the seal cap, wherein the curable sealant composition comprises components:
a) x weight percent of at least one polythiol;
b) y weight percent of at least one unsaturated compound having at least two non-aromatic carbon-carbon double bonds, at least one carbon-carbon triple bond, or a combination thereof;
c) from 0.01 to 8 weight percent of at least one organoborane-amine complex;
d) from 0.05 to 10 weight percent of at least one organic peroxide; and
e) from 0.01 to 10 weight percent of a photoinitiator system capable of generating free radicals upon exposure to actinic radiation, wherein x and y are positive real numbers, wherein x + y is in the range of 72 to 99, and wherein the weight percent ranges of the components a) - e) are based on the total weight of the components a) - e).

## Patentansprüche

1. Eine härtbare Dichtmittelzusammensetzung, umfassend die Komponenten:
a) zu x Gewichtsprozent mindestens ein Polythiol;
b) zu y Gewichtsprozent mindestens eine ungesättigte Verbindung mit mindestens zwei nichtaromatischen Kohlenstoff-Kohlenstoff-Doppelbindungen, mindestens einer Kohlenstoff-Kohlenstoff-Dreifachbindung oder einer Kombination davon;
c) zu von 0,01 bis 8 Gewichtsprozent mindestens einen Organoboran-Amin-Komplex;
d) zu von 0,05 bis 10 Gewichtsprozent mindestens ein organisches Peroxid; und
e) zu von 0,01 bis 10 Gewichtsprozent ein Photoinitiatorsystem, das in der Lage ist, bei Aussetzung gegenüber aktinischer Strahlung freie Radikale zu erzeugen, wobei x und y positive reelle Zahlen sind, wobei x + y im Bereich von 72 bis 99 liegt, und wobei die Gewichtsprozentbereiche der Komponenten a) - e) auf dem Gesamtgewicht der Komponenten a) - e) basieren.

2. Die härtbare Dichtmittelzusammensetzung nach Anspruch 1, wobei die härtbare Dichtmittelzusammensetzung umfasst:
a) zu von 70 bis 98 Gewichtsprozent das mindestens eine Polythiol;
b) zu von 2 bis 20 Gewichtsprozent die mindestens eine ungesättigte Verbindung;
c) zu von 0,01 bis 8 Gewichtsprozent den mindestens einen Organoboran-Amin-Komplex;
d) zu von 0,05 bis 10 Gewichtsprozent das mindestens eine organische Peroxid; und
e) zu von 0,01 bis 10 Gewichtsprozent das Photoinitiatorsystem, das in der Lage ist, bei Aussetzung gegenüber aktinischer Strahlung freie Radikale zu erzeugen.

3. Die härtbare Dichtmittelzusammensetzung nach Anspruch 1, wobei die härtbare Dichtmittelzusammensetzung umfasst:
a) zu von 80 bis 95 Gewichtsprozent das mindestens eine Polythiol;
b) zu von 3 bis 10 Gewichtsprozent die mindestens eine ungesättigte Verbindung;
c) zu von 0,25 bis 3 Gewichtsprozent den mindestens einen Organoboran-Amin-Komplex;
d) zu von 0,75 bis 5 Gewichtsprozent das mindestens eine organische Peroxid; und
e) zu von 0,1 bis 1,5 Gewichtsprozent das Photoinitiatorsystem, das in der Lage ist, bei Aussetzung gegenüber aktinischer Strahlung freie Radikale zu erzeugen.

4. Die härtbare Dichtmittelzusammensetzung nach Anspruch 1, wobei das mindestens eine Polythiol ein aliphatisches Polythiol umfasst.

5. Die härtbare Dichtmittelzusammensetzung nach Anspruch 1, wobei das Photoinitiatorsystem ein Acylphosphinoxid umfasst.

6. Eine zweiteilige härtbare Dichtmittelzusammensetzung, umfassend eine Teil-A-Zusammensetzung und eine Teil-B-Zusammensetzung, wobei:
die Teil-A-Zusammensetzung mindestens ein Polythiol umfasst; und
die Teil-B-Zusammensetzung mindestens eine ungesättigte Verbindung mit mindestens zwei nichtaromatischen Kohlenstoff-Kohlenstoff-Doppelbindungen, mindestens einer Kohlenstoff-Kohlenstoff-Dreifachbindung oder einer Kombination davon umfasst, wobei die Teil-A-Zusammensetzung und die Teil-B-Zusammensetzung zusammen die Komponenten umfassen:
a) zu x Gewichtsprozent das mindestens eine Polythiol;
b) zu y Gewichtsprozent die mindestens eine ungesättigte Verbindung;
c) zu von 0,01 bis 8 Gewichtsprozent mindestens einen Organoboran-Amin-Komplex;
d) zu von 0,05 bis 10 Gewichtsprozent mindestens ein organisches Peroxid; und
e) zu von 0,01 bis 10 Gewichtsprozent ein Photoinitiatorsystem, das in der Lage ist, bei Aussetzung gegenüber aktinischer Strahlung freie Radikale zu erzeugen, wobei x und y positive reelle Zahlen sind, wobei x + y im Bereich von 72 bis 99 liegt, und wobei die Gewichtsprozentbereiche der Komponenten a) - e) auf dem Gesamtgewicht der Komponenten a) - e) basieren.

7. Die zweiteilige härtbare Dichtmittelzusammensetzung nach Anspruch 6, wobei die Komponenten umfassen:
a) zu von 70 bis 98 Gewichtsprozent das mindestens eine Polythiol;
b) zu von 2 bis 20 Gewichtsprozent die mindestens eine ungesättigte Verbindung;
c) zu von 0,01 bis 8 Gewichtsprozent den mindestens einen Organoboran-Amin-Komplex;
d) zu von 0,05 bis 10 Gewichtsprozent das mindestens eine organische Peroxid; und
e) zu von 0,01 bis 10 Gewichtsprozent das Photoinitiatorsystem, das in der Lage ist, bei Aussetzung gegenüber aktinischer Strahlung freie Radikale zu erzeugen.

8. Die zweiteilige härtbare Dichtmittelzusammensetzung nach Anspruch 6, wobei die Komponenten umfassen:
a) zu von 80 bis 95 Gewichtsprozent das mindestens eine Polythiol;
b) zu von 3 bis 10 Gewichtsprozent die mindestens eine ungesättigte Verbindung;
c) zu von 0,25 bis 3 Gewichtsprozent den mindestens einen Organoboran-Amin-Komplex;
d) zu von 0,75 bis 5 Gewichtsprozent das mindestens eine organische Peroxid; und
e) zu von 0,1 bis 1,5 Gewichtsprozent das Photoinitiatorsystem, das in der Lage ist, bei Aussetzung gegenüber aktinischer Strahlung freie Radikale zu erzeugen.

9. Die zweiteilige härtbare Dichtmittelzusammensetzung nach Anspruch 6, wobei das mindestens eine Polythiol ein aliphatisches Polythiol umfasst.

10. Ein Verfahren zum Herstellen einer härtbaren Dichtmittelzusammensetzung, wobei das Verfahren umfasst:
Bereitstellen einer zweiteiligen härtbaren Dichtmittelzusammensetzung, die eine Teil-A-Zusammensetzung und eine Teil-B-Zusammensetzung umfasst,
wobei:
die Teil-A-Zusammensetzung mindestens ein Polythiol umfasst; und
die Teil-B-Zusammensetzung mindestens eine ungesättigte Verbindung mit mindestens zwei nichtaromatischen Kohlenstoff-Kohlenstoff-Doppelbindungen, mindestens einer Kohlenstoff-Kohlenstoff-Dreifachbindung oder einer Kombination davon umfasst, wobei die Teil-A-Zusammensetzung und die Teil-B-Zusammensetzung zusammen die Komponenten umfassen:
a) zu x Gewichtsprozent das mindestens eine Polythiol;
b) zu y Gewichtsprozent mindestens eine ungesättigte Verbindung;
c) zu von 0,01 bis 8 Gewichtsprozent mindestens einen Organoboran-Amin-Komplex;
d) zu von 0,05 bis 10 Gewichtsprozent mindestens ein organisches Peroxid; und
e) zu von 0,01 bis 10 Gewichtsprozent ein Photoinitiatorsystem, das in der Lage ist, bei Aussetzung gegenüber aktinischer Strahlung freie Radikale zu erzeugen, wobei x und y positive reelle Zahlen sind, wobei x + y im Bereich von 72 bis 99 liegt, und wobei die Gewichtsprozentbereiche der Komponenten a) - e) auf dem Gesamtgewicht der Komponenten a) - e) basieren; und
Kombinieren zumindest eines Teils der Teil-A-Zusammensetzung mit zumindest einem Teil der Teil-B-Zusammensetzung, um eine härtbare Dichtmittelzusammensetzung bereitzustellen.

11. Ein Verfahren zum Abdichten eines Substrats, wobei das Verfahren umfasst:
i) Aufbringen einer härtbaren Dichtmittelzusammensetzung auf eine Oberfläche des Substrats, wobei die härtbare Dichtmittelzusammensetzung die Komponenten umfasst:
a) zu x Gewichtsprozent das mindestens eine Polythiol;
b) zu y Gewichtsprozent mindestens eine ungesättigte Verbindung mit mindestens zwei nichtaromatischen Kohlenstoff-Kohlenstoff-Doppelbindungen, mindestens einer Kohlenstoff-Kohlenstoff-Dreifachbindung oder einer Kombination davon;
c) zu von 0,01 bis 8 Gewichtsprozent mindestens einen Organoboran-Amin-Komplex;
d) zu von 0,05 bis 10 Gewichtsprozent mindestens ein organisches Peroxid; und
e) zu von 0,01 bis 10 Gewichtsprozent ein Photoinitiatorsystem, das in der Lage ist, bei Aussetzung gegenüber aktinischer Strahlung freie Radikale zu erzeugen, wobei x und y positive reelle Zahlen sind, wobei x + y im Bereich von 72 bis 99 liegt, und wobei die Gewichtsprozentbereiche der Komponenten a) - e) auf dem Gesamtgewicht der Komponenten a) - e) basieren;
ii) Aussetzen zumindest eines Teils des mindestens einen Photoinitiators gegenüber aktinischer elektromagnetischer Strahlung; und
iii) Aushärten der härtbaren Dichtmittelzusammensetzung in ihrer gesamten Masse.

12. Das Verfahren nach Anspruch 11, wobei das Substrat eine Flugzeugkomponente umfasst.

13. Das Verfahren nach Anspruch 12, wobei die härtbare Dichtmittelzusammensetzung auf eine Naht oder eine Fügestelle zwischen Teilen der Flugzeugau-ßenhaut aufgebracht wird.

14. Das Verfahren nach Anspruch 13, wobei die härtbare Dichtmittelzusammensetzung auf mindestens eines von einem Flugzeugbefestigungselement, einem Flugzeugfenster, einer Flugzeugzugangsklappe, einem Rumpfvorsprung oder einem Flugzeugtreibstofftank aufgebracht wird.

15. Eine Dichtkappe, umfassend:
eine Kappe, die einen Innenraum definiert, der an einem Ende offen ist; und
härtbare Dichtmittelzusammensetzung, die innerhalb des Innenraums der Dichtkappe angeordnet ist, wobei die härtbare Dichtmittelzusammensetzung die Komponenten umfasst:
a) zu x Gewichtsprozent mindestens ein Polythiol;
b) zu y Gewichtsprozent mindestens eine ungesättigte Verbindung mit mindestens zwei nichtaromatischen Kohlenstoff-Kohlenstoff-Doppelbindungen, mindestens einer Kohlenstoff-Kohlenstoff-Dreifachbindung oder einer Kombination davon;
c) zu von 0,01 bis 8 Gewichtsprozent mindestens einen Organoboran-Amin-Komplex;
d) zu von 0,05 bis 10 Gewichtsprozent mindestens ein organisches Peroxid; und
e) zu von 0,01 bis 10 Gewichtsprozent ein Photoinitiatorsystem, das in der Lage ist, bei Aussetzung gegenüber aktinischer Strahlung freie Radikale zu erzeugen, wobei x und y positive reelle Zahlen sind, wobei x + y im Bereich von 72 bis 99 liegt, und wobei die Gewichtsprozentbereiche der Komponenten a) - e) auf dem Gesamtgewicht der Komponenten a) - e) basieren.

## Revendications

1. Composition de mastic durcissable comprenant les composants :
a) x pour cent en poids d'au moins un polythiol ;
b) y pour cent en poids d'au moins un composé insaturé ayant au moins deux doubles
liaisons carbone-carbone non aromatiques, au moins une triple liaison carbone-carbone, ou une combinaison de celles-ci ;
c) de 0,01 à 8 pour cent en poids d'au moins un complexe organoborane-amine ;
d) de 0,05 à 10 pour cent en poids d'au moins un peroxyde organique ; et
e) de 0,01 à 10 pour cent en poids d'un système de photoinitiateur capable de générer des radicaux libres lors d'une exposition à un rayonnement actinique, dans laquelle x et y sont des nombres réels positifs, dans laquelle x + y est dans la plage de 72 à 99, et dans laquelle les plages de pourcentage en poids des composants a) à e) sont sur la base du poids total des composants a) à e).

2. Composition de mastic durcissable selon la revendication 1, dans laquelle la composition de mastic durcissable comprend :
a) de 70 à 98 pour cent en poids de l'au moins un polythiol ;
b) de 2 à 20 pour cent en poids de l'au moins un composé insaturé ;
c) de 0,01 à 8 pour cent en poids de l'au moins un complexe organoborane-amine ;
d) de 0,05 à 10 pour cent en poids de l'au moins un peroxyde organique ; et
e) de 0,01 à 10 pour cent en poids du système de photoinitiateur capable de générer des radicaux libres lors d'une exposition à un rayonnement actinique.

3. Composition de mastic durcissable selon la revendication 1, dans laquelle la composition de mastic durcissable comprend :
a) de 80 à 95 pour cent en poids de l'au moins un polythiol ;
b) de 3 à 10 pour cent en poids de l'au moins un composé insaturé ;
c) de 0,25 à 3 pour cent en poids de l'au moins un complexe organoborane-amine ;
d) de 0,75 à 5 pour cent en poids de l'au moins un peroxyde organique ; et
e) de 0,1 à 1,5 pour cent en poids du système de photoinitiateur capable de générer des radicaux libres lors d'une exposition à un rayonnement actinique.

4. Composition de mastic durcissable selon la revendication 1, dans laquelle l'au moins un polythiol comprend un polythiol aliphatique.

5. Composition de mastic durcissable selon la revendication 1, dans laquelle le système de photoinitiateur comprend un oxyde d'acylphosphine.

6. Composition de mastic durcissable à deux parties comprenant une composition de Partie A et une composition de Partie B, dans laquelle :
la composition de Partie A comprend au moins un polythiol ; et
la composition de Partie B comprend au moins un composé insaturé ayant au moins deux doubles liaisons carbone-carbone non aromatiques, au moins une triple liaison carbone-carbone, ou une combinaison de celles-ci, dans laquelle la composition de Partie A et la composition de Partie B comprennent collectivement les composants :
a) x pour cent en poids de l'au moins un polythiol ;
b) y pour cent en poids de l'au moins un composé insaturé ;
c) de 0,01 à 8 pour cent en poids d'au moins un complexe organoborane-amine ;
d) de 0,05 à 10 pour cent en poids d'au moins un peroxyde organique ; et
e) de 0,01 à 10 pour cent en poids d'un système de photoinitiateur capable de générer des radicaux libres lors d'une exposition à un rayonnement actinique, dans laquelle x et y sont des nombres réels positifs, dans laquelle x + y est dans la plage de 72 à 99, et dans laquelle les plages de pourcentage en poids des composants a) à e) sont sur la base du poids total des composants a) à e).

7. Composition de mastic durcissable à deux parties selon la revendication 6, dans laquelle les composants comprennent :
a) de 70 à 98 pour cent en poids de l'au moins un polythiol ;
b) de 2 à 20 pour cent en poids de l'au moins un composé insaturé ;
c) de 0,01 à 8 pour cent en poids de l'au moins un complexe organoborane-amine ;
d) de 0,05 à 10 pour cent en poids de l'au moins un peroxyde organique ; et
e) de 0,01 à 10 pour cent en poids du système de photoinitiateur capable de générer des radicaux libres lors d'une exposition à un rayonnement actinique.

8. Composition de mastic durcissable à deux parties selon la revendication 6, dans laquelle les composants comprennent :
a) de 80 à 95 pour cent en poids de l'au moins un polythiol ;
b) de 3 à 10 pour cent en poids de l'au moins un composé insaturé ;
c) de 0,25 à 3 pour cent en poids de l'au moins un complexe organoborane-amine ;
d) de 0,75 à 5 pour cent en poids de l'au moins un peroxyde organique ; et
e) de 0,1 à 1,5 pour cent en poids du système de photoinitiateur capable de générer des radicaux libres lors d'une exposition à un rayonnement actinique.

9. Composition de mastic durcissable à deux parties selon la revendication 6, dans laquelle l'au moins un polythiol comprend un polythiol aliphatique.

10. Procédé de fabrication d'une composition de mastic durcissable, le procédé comprenant :
la fourniture d'une composition de mastic durcissable à deux parties comprenant une composition de Partie A et une Partie B,
dans lequel :
la composition de Partie A comprend au moins un polythiol ; et
la composition de Partie B comprend au moins un composé insaturé ayant au moins deux doubles liaisons carbone-carbone non aromatiques, au moins une triple liaison carbone-carbone, ou une combinaison de celles-ci, dans lequel la composition de Partie A et la composition de Partie B comprennent collectivement les composants :
a) x pour cent en poids de l'au moins un polythiol ;
b) y pour cent en poids d'au moins un composé insaturé ;
c) de 0,01 à 8 pour cent en poids d'au moins un complexe organoborane-amine ;
d) de 0,05 à 10 pour cent en poids d'au moins un peroxyde organique ; et
e) de 0,01 à 10 pour cent en poids d'un système de photoinitiateur capable de générer des radicaux libres lors d'une exposition à un rayonnement actinique, dans lequel x et y sont des nombres réels positifs, dans lequel x + y est dans la plage de 72 à 99, et dans lequel les plages de pourcentage en poids des composants a) à e) sont sur la base du poids total des composants a) à e) ; et
la combinaison d'au moins une portion de la composition de Partie A avec au moins une portion de la composition de Partie B pour fournir une composition de mastic durcissable.

11. Procédé d'étanchéification d'un substrat, le procédé comprenant :
i) l'application d'une composition de mastic durcissable sur une surface du substrat, dans lequel la composition de mastic durcissable comprend les composants :
a) x pour cent en poids de l'au moins un polythiol ;
b) y pour cent en poids d'au moins un composé insaturé ayant au moins deux doubles liaisons carbone-carbone non aromatiques, au moins une triple liaison carbone-carbone, ou une combinaison de celles-ci ;
c) de 0,01 à 8 pour cent en poids d'au moins un complexe organoborane-amine ;
d) de 0,05 à 10 pour cent en poids d'au moins un peroxyde organique ; et
e) de 0,01 à 10 pour cent en poids d'un système de photoinitiateur capable de générer des radicaux libres lors d'une exposition à un rayonnement actinique, dans lequel x et y sont des nombres réels positifs, dans lequel x + y est dans la plage de 72 à 99, et dans lequel les plages de pourcentage en poids des composants a) à e) sont sur la base du poids total des composants a) à e) ;
ii) l'exposition d'au moins une portion de l'au moins un photoinitiateur à un rayonnement électromagnétique actinique ; et
iii) le durcissement de la composition de mastic durcissable sur l'ensemble de sa masse.

12. Procédé selon la revendication 11, dans lequel le substrat comprend un composant d'aéronef.

13. Procédé selon la revendication 12, dans lequel la composition de mastic durcissable est appliquée à une jointure ou à un joint entre des portions de peau d'aéronef.

14. Procédé selon la revendication 13, dans lequel la composition de mastic durcissable est appliquée à au moins un parmi un élément de fixation d'aéronef, un hublot d'aéronef, un panneau d'accès d'aéronef, une partie saillante de fuselage, ou un réservoir à carburant d'aéronef.

15. Capuchon d'étanchéité comprenant :
un capuchon qui définit un intérieur qui est ouvert sur une extrémité ; et
une composition de mastic durcissable disposée au sein de l'intérieur du capuchon d'étanchéité, dans lequel la composition de mastic durcissable comprend les composants :
a) x pour cent en poids d'au moins un polythiol ;
b) y pour cent en poids d'au moins un composé insaturé ayant au moins deux doubles
liaisons carbone-carbone non aromatiques, au moins une triple liaison carbone-carbone, ou une combinaison de celles-ci ;
c) de 0,01 à 8 pour cent en poids d'au moins un complexe organoborane-amine ;
d) de 0,05 à 10 pour cent en poids d'au moins un peroxyde organique ; et
e) de 0,01 à 10 pour cent en poids d'un système de photoinitiateur capable de générer des
radicaux libres lors d'une exposition à un rayonnement actinique, dans lequel x et y sont des nombres réels positifs, dans lequel x + y est dans la plage de 72 à 99, et dans lequel les plages de pourcentage en poids des composants a) à e) sont sur la base du poids total des composants a) à e).
